# EUROPEAN PATENT SPECIFICATION

(11) **EP 2 858 405 B1**
(45) Date of publication and mention of the grant of the patent: **31.01.2018**
(21) Application number: 13800530.1
(22) Date of filing: 05.06.2013
(51) Int. Cl.: H04W 24/08, H04L 5/14

(54) **METHOD AND DEVICE FOR DETERMINING UPLINK TRANSMISSION INTERRUPTION TIME**
VERFAHREN UND VORRICHTUNG ZUR BESTIMMUNG DER UNTERBRECHUNGSZEIT EINER UPLINK-ÜBERTRAGUNG
PROCÉDÉ ET DISPOSITIF POUR DÉTERMINER UN TEMPS D'INTERRUPTION DE TRANSMISSION EN LIAISON MONTANTE

(30) Priority: 05.06.2012 CN 201210182245; 20.03.2013 CN 201310090631
(43) Date of publication of application: 08.04.2015
(73) Proprietor: China Academy of Telecommunications Technology, Haidian District Beijing 100191 (CN)
(72) Inventor: ZHAO, Yali, Beijing 100191 (CN)
(74) Representative: Körfer, Thomas
(86) International application number: PCT/CN2013/076766
(87) International publication number: WO 2013/182047

(56) References cited:
- EP-A1- 2 367 385
- WO-A1-2008/041832
- WO-A1-2010/078365
- WO-A1-2011/098991
- WO-A1-2013/051989
- CN-A- 101 784 075
- CN-A- 102 378 210
- CN-A- 102 440 051
- CN-A- 102 448 107
- US-A1- 2011 199 908

## Description

### Field of the Invention

The present invention relates to the field of communications and particularly to a method and a device for determining uplink transmission interruption time.

### Background of the Invention

Time Division Duplex (TDD) uplink/downlink (UL/DL) configurations are as depicted in Table 1. Seven kinds of TDD UL/DL configurations are defined for a TDD system in the physical layer standard, where D represents a DL sub-frame, U represents a UL sub-frame, and S represents a special sub-frame of the TDD system.

**Table 1 TDD UL/DL configurations**

| TDD UL/DL configuration No. | Serial number of sub-frame | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

Typically the TD UL/DL configuration of each cell is determined and can be notified to a User Equipment (UE) in a broadcast message. However in order to utilize resources more flexibly, a dynamic TDD UL/DL configuration is supported in the Long Tem Evolution (LTE) system, that is, transmission directions in a part or all of sub-frames in a radio frame are determined as scheduled. For example, if some sub-frame has no UL scheduling signaling or is not configured with a Physical Uplink Control Channel (PUCCH)/Sounding Reference Signal (SRS), then it can be considered as a downlink sub-frame; otherwise, it can be considered as an uplink sub-frame.

The Carrier Aggregation (CA) technology has been proposed in the prior art. As compared with the LTE system, the peak rates in the Long Term Evolution-Advanced (LTE-A) are improved significantly, where 1Gbps in the downlink and 500Mbps in the uplink are required. The LTE-A system is required to be well compatible with the LTE system. The carrier aggregation technology has been introduced to the LTE-A system to thereby accommodate the improved peak rates, compatibility with the LTE system and full use of spectrum resources as needed. With the CA technology, a User Equipment (UE) can operate concurrently over a plurality of cells, where these cells can be consecutive or inconsecutive in frequency, and bandwidths of the respective cells may be the same or different. There is a limited bandwidth up to 20MHz of each cell for compatibility with the LTE system, and the number of cells that can be aggregated by one UE is typically up to 5 at present.

In the CA system, cells configured by an evolved Node B (eNB) for the UE are referred to as serving cells. All the functions of the different serving cells may not be the same, so the serving cells are further categorized in the LTE-A system as follows: a Primary Cell (PCell) and a Secondary Cell (SCell), where only one of the plurality of cells aggregated by the UE is defined as the PCell. The PCell is selected by the eNB and configured to the UE in Radio Resource Control (RRC) signaling, and only the PCell is configured with a PUCCH. All the cells except the PCell aggregated by the UE are SCells.

The concept of the measurement gap has been proposed in the prior art. In order to perform a cell handover between different frequencies or different systems, the LTE system needs to configure the UE to stop receiving and sending data over the current operating band for a period of time and to tune a transceiver to measure the channel quality at a different frequency or in a different system cell, where the period of time is referred to as the measurement gap. Moreover in the LTE system, patterns of the measurement gap are as depicted in Table 2.

**Table 2 Gap pattern configurations supported by UE**

| Gap pattern | Measurement Gap Length (MGL) (in ms) | Repetitive periodicity of measurement gap (in ms) | Shortest measurement period (in ms) for different frequency or different system in 480 ms |
|---|---|---|---|
| 0 | 6 | 40 | 60 |
| 1 | 6 | 80 | 30 |

It shall be noted that in the LTE-A R10, whether the UE needs the measurement gap when measuring some frequency point depends upon the UE capability. The UE signals the UE capability to the eNB in a UE capability report, where a measurement capability in the UE capability report signaling is reported per band combination, that is, a report is made on whether the UE operating in some band combination needs a measurement gap when measuring another band. Since the UE needs to tune the transceiver in the measurement gap to measure at a specified different frequency or frequency of a different system, the uplink/downlink transmission in the current serving cell needs to be interrupted.

In the prior art, systems of the LTE-A R10 and earlier only support aggregation of cells in the same duplex mode or the same TDD UL/DL configuration by the UE, so the uplink transmission interruption time resulting from the measurement gap is the same for all the cells aggregated by the UE, and once uplink transmission interruption resulting from the measurement gap occurs, the UE can stop uplink transmission over all the cells without distinguishing one cell from another.

The inventors have identified, during making of the technical solution of the invention, at least the following problems in the prior art:

In systems of the LTE-A R11 and later, cells in different duplex modes or different TDD UL/DL configurations are allowed to be aggregated by the UE, so the uplink transmission interruption time resulting from the measurement gap may not be the same for all the cells aggregated by the UE. WO 2010/078365 A1 (INTERDIGITAL PATENT HOLDINGS [US]; TERRY STEPHEN E [US]; BALA ERDEM [U) 8 July 2010 (2010-07-08), discloses a method where discontinuous reception operation at a UE in measurement gaps is disclosed. In the prior art, there is no solution how the UE shall stop uplink transmission over the respective cells when the uplink transmission interruption resulting from the measurement gap occurs.

### Summary of the Invention

Embodiments of the invention provide a method and a device for determining uplink transmission interruption time so as to determine the uplink transmission interruption time resulting from a measurement gap when cells in different duplex modes or different TDD UL/DL configurations are aggregated by a UE.

In order to attain the object above, an embodiment of the invention provides a method for determining uplink transmission interruption time, the method including:
a UE determining uplink transmission interruption time of each cell aggregated by the UE, according to a measurement gap configuration, wherein respective cells aggregated by the UE are in different duplex modes or have different TDD UL/DL configurations; and
the UE stopping, during the uplink transmission interruption time of each cell aggregated by the UE, uplink transmission of the cell.

An embodiment of the invention further provides another method for determining uplink transmission interruption time, the method including:
a base station device determining uplink transmission interruption time of each cell aggregated by a UE, according to a measurement gap configuration, wherein respective cells aggregated by the UE are in different duplex modes or have different TDD UL/DL configurations; and
the base station device stopping sending uplink transmission scheduling information during the uplink transmission interruption time of each cell aggregated by the UE to the UE over the cell.

An embodiment of the invention further provides a UE including:
a determining module configured to determine uplink transmission interruption time of each cell aggregated by the UE, according to a measurement gap configuration, wherein respective cells aggregated by the UE are in different duplex modes or have different TDD UL/DL configurations; and
a processing module configured to stop, during the uplink transmission interruption time of each cell aggregated by the UE, uplink transmission of the cell.

An embodiment of the invention further provides a base station device including:
a determining module configured to determine uplink transmission interruption time of each cell aggregated by a UE, according to a measurement gap configuration, wherein respective cells aggregated by the UE are in different duplex modes or have different TDD UL/DL configurations; and
a processing module configured to stop sending uplink transmission scheduling information during the uplink transmission interruption time of each cell aggregated by the UE to the UE over the cell.

As can be apparent from the technical solution above, the uplink transmission interruption time of each cell aggregated by a UE can be determined to thereby determine definitively the uplink transmission interruption time resulting from the measurement gap so that the UE can know how to stop uplink transmission over the respective cells.

### Brief Description of the Drawings

In order to illustrate the technical solution of the invention more clearly, the drawings required to be used in the description of the embodiments will be briefly introduced below, and apparently the drawings to be described below are merely illustrative of some of the embodiments of the invention, and those ordinarily skilled in the art can derive other drawings from these drawings without any inventive effort.
Fig.1 is a schematic flow chart of determining, by a UE, uplink transmission interruption time according to a first embodiment of the invention;
Fig.2 is a schematic flow chart of determining, by a base station device, uplink transmission interruption time according to the first embodiment of the invention;
Fig.3 is a schematic diagram of determining uplink transmission interruption time over each of Cell 1 and Cell 2 according to a second embodiment of the invention;
Fig.4 is a schematic diagram of determining uplink transmission interruption time over each of Cell 1 and Cell 2 according to a third embodiment of the invention;
Fig.5 is a schematic diagram of determining uplink transmission interruption time over each of Cell 1 and Cell 2 according to a fourth embodiment of the invention;
Fig.6 is a schematic diagram of determining uplink transmission interruption time over Cell 1 according to a fifth embodiment of the invention;
Fig.7 is a schematic diagram of determining uplink transmission interruption time over Cell 2 according to a sixth embodiment of the invention;
Fig.8 is a schematic diagram of determining uplink transmission interruption time over each of Cell 1 and Cell 2 according to a seventh embodiment of the invention;
Fig.9 is a schematic structural diagram of a user equipment according to an eighth embodiment of the invention; and
Fig. 10 is a schematic structural diagram of a base station device according to a ninth embodiment of the invention.

### Detailed Description of the Embodiments

The technical solution according to the embodiments of the invention will be described below clearly and fully with reference to the drawings. Apparently the described embodiments are only a part, but not all, of the embodiments of the invention. Based upon the embodiments of the invention, all the other embodiments derived by those ordinarily skilled in the art without any inventive effort shall fall into the scope of the invention.

### First Embodiment

The first embodiment of the invention provides a method for determining uplink transmission interruption time (i.e., uplink transmission interruption time resulting from a measurement gap), which can be applicable to system of the LTE-A R11 and later and in which cells in different duplex modes or different TDD UL/DL configurations are allowed to be aggregated by a UE. The method can include a process of determining, by a UE, uplink transmission interruption time and a process of determining, by a base station device, uplink transmission interruption time.

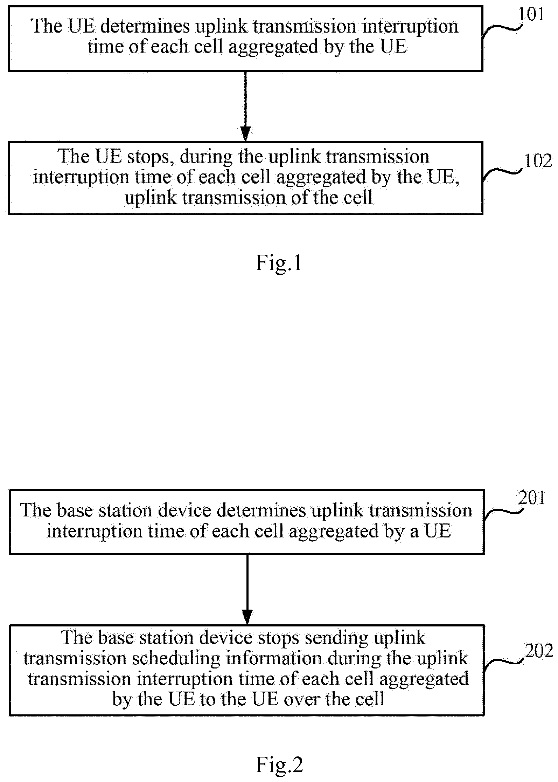

Fig.1 is a flow chart of determining, by a UE, uplink transmission interruption time. As illustrated in Fig.1, the method includes the following operations.

Operation 101: the UE determines uplink transmission interruption time of each cell aggregated by the UE.

In an embodiment of the invention, the UE determines the uplink transmission interruption time of each cell aggregated by the UE in the following three approaches without any limitation thereto.

In a first approach, the uplink transmission interruption time resulting from the measurement gap is determined based upon the UE.

In this first approach, the UE determines uplink transmission interruption time corresponding to all the cells aggregated by the UE as the uplink transmission interruption time of each cell. For example, when three cells are aggregated by the UE, these three cells correspond to the same uplink transmission interruption time, so the uplink transmission interruption time is determined as the uplink transmission interruption time of each cell.

Particularly the UE determines the uplink transmission interruption time corresponding to all the cells aggregated by the UE as the uplink transmission interruption time of each cell as follows:

The UE determines uplink transmission interruption time resulting from the measurement gap over each cell aggregated by the UE according to the duplex mode and/or TDD UL/DL configuration of the each cell, and determines a union set or an intersection set of the uplink transmission interruption time over all cells as the uplink transmission interruption time of the each cell; or

When the UE and a base station device prescribe the uplink transmission interruption time resulting from the measurement gap to be (MGL + a specified value) ms, the UE determines the uplink transmission interruption time of the each cell to be (MGL + the specified value) ms, for example, the specified value is 1ms); or

The UE determines uplink transmission interruption time resulting from the measurement gap according to a reference duplex mode and/or TDD UL/DL configuration and takes the uplink transmission interruption time as the uplink transmission interruption time of each cell, where the reference duplex mode and/or TDD UL/DL configuration is any one of the following duplex modes and/or TDD UL/DL configurations:
1) A duplex mode and/or a TDD UL/DL configuration of a PCell;
2) A duplex mode and/or a TDD UL/DL configuration prescribed by the base station device and the UE;
3) A duplex mode and/or a TDD UL/DL configuration configured by an Operation Administration and Maintenance (OAM) entity; and
4) A duplex mode and/or a TDD UL/DL configuration notified by the base station device to the UE via an explicit signaling.

The explicit signaling can be RRC signaling, MAC signaling or physical layer signaling.

In an embodiment of the invention, in the processes of determining the uplink transmission interruption time of each cell according to the duplex mode and/or the TDD UL/DL configuration of each cell and of determining the uplink transmission interruption time of each cell according to the reference duplex mode and/or TDD UL/DL configuration, the uplink transmission interruption time resulting from the measurement gap is associated with the duplex mode(s) and/or the TDD UL/DL configuration(s). For FDD, the uplink transmission interruption time resulting from the measurement gap is MGL plus the first sub-frame subsequent to MGL. For TDD, if the sub-frame prior to the measurement gap is a DL sub-frame and the first sub-frame subsequent to the measurement gap is a UL sub-frame, then the uplink transmission interruption time resulting from the measurement gap is MGL plus the first sub-frame subsequent to MGL. In other situations, the uplink transmission interruption time resulting from the measurement gap is MGL.

It shall be noted that this approach, in which the uplink transmission interruption time resulting from the measurement gap is determined based upon the UE, can be applicable to full-duplex and half-duplex UEs.

In a second approach, the uplink transmission interruption time resulting from the measurement gap is determined based upon a set of same duplex configurations.

In this second approach, the UE determines the uplink transmission interruption time respectively for each cell based upon a set of duplex configurations to which the each cell belongs, where the set of duplex configurations includes at least one aggregated cell, and when the set of duplex configurations includes a plurality of cells, the plurality of cells have the same duplex mode and/or TDD UL/DL configuration.

When each set of same duplex configurations includes one cell, which indicates that the respective cells aggregated by the UE adopt different duplex modes and/or TDD UL/DL configurations, the event that the UE determines the uplink transmission interruption time respectively for each cell based upon the set of duplex configurations to which the each cell belongs is equivalent to that the UE determines the uplink transmission interruption time corresponding to each cell aggregated by the UE. That is, the uplink transmission interruption time resulting from the measurement gap is determined respectively for each cell according to its duplex mode. Its TDD UL/DL configuration needs to be further taken into account for TDD. For example, when three cells are aggregated by the UE and these three cells adopt different duplex modes and/or TDD UL/DL configurations, each of the three cells corresponds respectively to one uplink transmission interruption time.

Furthermore, the UE determines the uplink transmission interruption time respectively for each cell based upon the set of duplex configurations to which the each cell belongs as follows: the UE determines uplink transmission interruption time according to a duplex mode and/or TDD UL/DL configuration in the set of duplex configurations, and takes the uplink transmission interruption time as the uplink transmission interruption time of each cell in the set of duplex configurations; or, the UE determines uplink transmission interruption time according to a reference duplex mode and/or TDD UL/DL configuration in the set of duplex configurations, and takes the uplink transmission interruption time as the uplink transmission interruption time of each cell in the set of duplex configurations, where the reference duplex mode and/or TDD UL/DL configuration is any one of the following duplex modes and/or TDD UL/DL configurations:
1) A duplex mode and/or a TDD UL/DL configuration of a PCell;
2) A duplex mode and/or a TDD UL/DL configuration prescribed by the base station device and the UE;
3) A duplex mode and/or a TDD UL/DL configuration configured by an OAM entity; and
4) A duplex mode and/or a TDD UL/DL configuration notified by the base station device to the UE via an explicit signaling.

The explicit signaling can be RRC signaling, MAC signaling or physical layer signaling.

In an embodiment of the invention, in the process in which the UE determines the uplink transmission interruption time corresponding to each cell in the set of duplex configurations according to the duplex mode and/or the TDD UL/DL configuration in the set of duplex configurations or according to the reference duplex mode and/or TDD UL/DL configuration in the set of duplex configurations, the uplink transmission interruption time resulting from the measurement gap is associated with the duplex mode(s) and/or the TDD UL/DL configuration(s). For FDD, the uplink transmission interruption time resulting from the measurement gap is MGL plus the first sub-frame subsequent to MGL. For TDD, if the sub-frame prior to the measurement gap is a DL sub-frame and the first sub-frame subsequent to the measurement gap is a UL sub-frame, then the uplink transmission interruption time resulting from the measurement gap is MGL plus the first sub-frame subsequent to MGL. In other situations, the uplink transmission interruption time resulting from the measurement gap is MGL.

It shall be noted that this approach of determining the uplink transmission interruption time resulting from the measurement gap based upon the cell or the set of same duplex configurations can be applicable to the full-duplex UE.

In a third approach, the uplink transmission interruption time resulting from the measurement gap is determined based upon the transceiver.

It is only necessary to tune one of transceivers for different frequencies/different systems without interrupting transmission of uplink/downlink data in cells supported by the other transceivers, so in the third approach, the UE can determine the transceiver required to perform measurements and the aggregated cells served by the transceiver and determine the uplink transmission interruption time respectively for each aggregated cell served by the transceiver, and determine uplink transmission interruption time of aggregated cells served by other transceivers of the UE to be 0, that is, it is not necessary to determine the uplink transmission interruption time for the aggregated cells served by the other transceivers.

Furthermore, the process of determining, by the UE, the transceiver required to perform measurements (i.e., a specific transceiver to be tuned) includes: when the UE and the base station device prescribe to tune the transceiver supporting the highest frequency, the UE determines the transceiver at the highest frequency as the transceiver required to perform measurements; or when the UE and the base station device prescribe to tune the transceiver supporting the lowest frequency, the UE determines the transceiver at the lowest frequency as the transceiver required to perform measurements; or when the base station device explicitly configures a transceiver to be tuned, the UE receives the explicit configuration information from the base station device to indicate the band corresponding to the transceiver required to perform measurements and determines the transceiver corresponding to the band as the transceiver required to perform measurements.

In an embodiment of the invention, the UE determines the uplink transmission interruption time of each aggregated cell served by the transceiver particularly as follows:

The UE determines the uplink transmission interruption time resulting from the measurement gap over each of the aggregated cells served by the transceiver according to the duplex mode and/or TDD UL/DL configuration of each cell, and takes the determined uplink transmission interruption time as the uplink transmission interruption time corresponding to each cell; or

The UE determines the uplink transmission interruption time resulting from the measurement gap over each of the aggregated cells served by the transceiver according to the duplex mode and/or TDD UL/DL configuration of each cell, and takes the union set of the uplink transmission interruption time over all the cells as the uplink transmission interruption time of each cell; or

The UE determines the uplink transmission interruption time resulting from the measurement gap according to the reference duplex mode and/or TDD UL/DL configuration, and takes the uplink transmission interruption time as the uplink transmission interruption time of each aggregated cell served by the transceiver, where the reference duplex mode and/or TDD UL/DL configuration is any one of the following duplex modes and/or TDD UL/DL configurations:
1) A duplex mode and/or a TDD UL/DL configuration of a PCell;
2) A duplex mode and/or a TDD UL/DL configuration prescribed by the base station device and the UE;
3) A duplex mode and/or a TDD UL/DL configuration configured by an OAM entity; and
4) A duplex mode and/or a TDD UL/DL configuration notified by the base station device to the UE via an explicit signaling.

The explicit signaling can be RRC signaling, MAC signaling or physical layer signaling.

In an embodiment of the invention, in the process in which the UE determines the uplink transmission interruption time of each of the aggregated cells served by the transceiver, the uplink transmission interruption time resulting from the measurement gap is associated with the duplex modes and the TDD UL/DL configurations of the cells corresponding to the transceiver or the reference duplex mode and TDD UL/DL configuration used by the cells corresponding to the transceiver. For FDD, the uplink transmission interruption time resulting from the measurement gap is MGL plus the first sub-frame subsequent to MGL. For TDD, if the sub-frame prior to the measurement gap is a DL sub-frame and the first sub-frame subsequent to the measurement gap is a UL sub-frame, then the uplink transmission interruption time resulting from the measurement gap is MGL plus the first sub-frame subsequent to MGL. In other situations, the uplink transmission interruption time resulting from the measurement gap is MGL.

It shall be noted that this approach of determining the uplink transmission interruption time resulting from the measurement gap based upon the transceiver can be applicable to the UE with a plurality of transceivers and supporting the full-duplex mode.

Operation 102: the UE stops, during the uplink transmission interruption time of each cell aggregated by the UE, uplink transmission of the cell. For the first approach above, the UE stops uplink transmission of all the cells during the determined uplink transmission interruption time without adopting different uplink transmission processes for different cells. For the second approach above, during the uplink transmission interruption time, the UE stops uplink transmission of the cells corresponding to the determined uplink transmission interruption time, which is required to process uplink transmission differently from one cell to another. For the third approach above, during the determined uplink transmission interruption time, the UE stops uplink transmission of the cells corresponding to the determined transceiver, which is required to adopt different uplink transmission processes for different cells.

In an embodiment of the invention, if the uplink transmission interruption time resulting from the measurement gap is determined based upon the UE, then during the uplink transmission interruption time determined based upon the measurement gap, the UE is not allowed for performing any uplink transmission but can process the UL grant. Thus during the uplink transmission interruption time of the respective cells aggregated by the UE, the UE stops uplink transmission of the cells as follows: during the uplink transmission interruption time of each cell aggregated by the UE, the UE stops transmitting one or any combination of the following information over the cell: a Physical Uplink Shared Channel (PUSCH), a PUCCH, a Physical Random Access Channel (PRACH) and a Sounding Reference Signal (SRS).

Furthermore, the PUCCH includes one or any combination of the following information: a Channel Quality Indicator (CQI), a Pre-coding Matrix Indicator (PMI), a Rank Indication (RI), a Scheduling Request (SR) and a Hybrid Automatic Repeat Request (HARQ) feedback.

In an embodiment of the invention, different duplex modes and/or different TDD UL/DL configurations can apply to the cells aggregated by the UE. For example, different duplex modes and/or different TDD UL/DL configurations can apply to at least two cells.

Fig.2 is a flow chart of determining, by a base station device, uplink transmission interruption time. As illustrated in Fig.2, the method includes the following operations:

Operation 201: the base station device determines uplink transmission interruption time of each cell aggregated by a UE.

In an embodiment of the invention, the base station device determines the uplink transmission interruption time of each cell aggregated by the UE in the following three approaches without any limitation thereto.

In a first approach, the uplink transmission interruption time resulting from the measurement gap is determined based upon the UE.

In this first approach, the base station device determines the uplink transmission interruption time corresponding to all the cells aggregated by the UE as the uplink transmission interruption time of each cell. For example, when three cells are aggregated by the UE, these three cells correspond to the same uplink transmission interruption time.

Particularly the base station device determines the uplink transmission interruption time corresponding to all the cells aggregated by the UE as the uplink transmission interruption time of each cell as follows:

The base station device determines the uplink transmission interruption time resulting from the measurement gap over each cell aggregated by the UE according to the duplex mode and/or TDD UL/DL configuration of the each cell, and determines a union set or an intersection set of the uplink transmission interruption time over all cells as the uplink transmission interruption time of the each cell; or

When the UE and the base station device prescribe the uplink transmission interruption time resulting from the measurement gap to be (MGL + a specified value) ms, the base station device determines the uplink transmission interruption time of each cell to be (MGL + the specified value) ms, for example, the specified value is 1ms); or

The base station device determines the uplink transmission interruption time resulting from the measurement gap according to the reference duplex mode and/or TDD UL/DL configuration and takes the uplink transmission interruption time as the uplink transmission interruption time of each cell, where the reference duplex mode and/or TDD UL/DL configuration is any one of the following duplex modes and/or TDD UL/DL configurations:
1) A duplex mode and/or a TDD UL/DL configuration of a PCell;
2) A duplex mode and/or a TDD UL/DL configuration prescribed by the base station device and the UE;
3) A duplex mode and/or a TDD UL/DL configuration configured by an OAM entity; and
4) A duplex mode and/or a TDD UL/DL configuration notified by the base station device to the UE via an explicit signaling.

The explicit signaling can be RRC signaling, MAC signaling or physical layer signaling.

In an embodiment of the invention, in the processes of determining the uplink transmission interruption time of each cell according to the duplex mode and/or the TDD UL/DL configuration of each cell and of determining the uplink transmission interruption time of each cell according to the reference duplex mode and/or TDD UL/DL configuration, the uplink transmission interruption time resulting from the measurement gap is associated with the duplex mode(s) and/or the TDD UL/DL configuration(s). For FDD, the uplink transmission interruption time resulting from the measurement gap is MGL plus the first sub-frame subsequent to MGL. For TDD, if the sub-frame prior to the measurement gap is a DL sub-frame and the first sub-frame subsequent to the measurement gap is a UL sub-frame, then the uplink transmission interruption time resulting from the measurement gap is MGL plus the first sub-frame subsequent to MGL. In other situations, the uplink transmission interruption time resulting from the measurement gap is MGL.

It shall be noted that this approach, in which the uplink transmission interruption time resulting from the measurement gap is determined based upon the UE, can be applicable to full-duplex and half-duplex UEs.

In a second approach, the uplink transmission interruption time resulting from the measurement gap is determined based upon a set of same duplex configurations.

In this second approach, the base station device determines the uplink transmission interruption time respectively for each cell based upon a set of duplex configurations to which the each cell belongs, where the set of duplex configurations includes at least one aggregated cell, and when the set of duplex configurations includes a plurality of cells, the plurality of cells have the same duplex mode and/or TDD UL/DL configuration.

When each set of same duplex configurations includes one cell, which indicates that the respective cells aggregated by the UE adopt different duplex modes and/or TDD UL/DL configurations, the event that the base station device determines the uplink transmission interruption time respectively for each cell based upon the set of duplex configurations to which the each cell belongs is equivalent to that the base station device determines the uplink transmission interruption time corresponding to each cell aggregated by the UE. That is, the uplink transmission interruption time resulting from the measurement gap is determined respectively for each cell or each set of duplex configurations according to its duplex mode. Its TDD UL/DL configuration needs to be further taken into account for TDD. For example, when three cells are aggregated by the UE and these three cells adopt different duplex modes and/or TDD UL/DL configurations, each of the three cells corresponds respectively to one uplink transmission interruption time.

Furthermore, the base station device determines the uplink transmission interruption time respectively for each cell based upon the set of duplex configurations to which the each cell belongs as follows: the base station device determines uplink transmission interruption time according to a duplex mode and/or TDD UL/DL configuration in the set of duplex configurations, and takes the uplink transmission interruption time as the uplink transmission interruption time of each cell in the set of duplex configurations; or, the base station device determines uplink transmission interruption time according to a reference duplex mode and/or TDD UL/DL configuration in the set of duplex configurations, and takes the uplink transmission interruption time as the uplink transmission interruption time of each cell in the set of duplex configurations, where the reference duplex mode and/or TDD UL/DL configuration is any one of the following duplex modes and/or TDD UL/DL configurations:
1) A duplex mode and/or a TDD UL/DL configuration of a PCell;
2) A duplex mode and/or a TDD UL/DL configuration prescribed by the base station device and the UE;
3) A duplex mode and/or a TDD UL/DL configuration configured by an OAM entity; and
4) A duplex mode and/or a TDD UL/DL configuration notified by the base station device to the UE via an explicit signaling.

The explicit signaling can be RRC signaling, MAC signaling or physical layer signaling.

In an embodiment of the invention, in the process in which the base station device determines the uplink transmission interruption time corresponding to each cell in the set of duplex configurations according to the duplex mode and/or the TDD UL/DL configuration in the set of duplex configurations or according to the reference duplex mode and/or TDD UL/DL configuration in the set of duplex configurations, the uplink transmission interruption time resulting from the measurement gap is associated with the duplex mode(s) and/or the TDD UL/DL configuration(s). For FDD, the uplink transmission interruption time resulting from the measurement gap is MGL plus the first sub-frame subsequent to MGL. For TDD, if the sub-frame prior to the measurement gap is a DL sub-frame and the first sub-frame subsequent to the measurement gap is a UL sub-frame, then the uplink transmission interruption time resulting from the measurement gap is MGL plus the first sub-frame subsequent to MGL. In other situations, the uplink transmission interruption time resulting from the measurement gap is MGL.

It shall be noted that this approach of determining the uplink transmission interruption time resulting from the measurement gap based upon the cell or for the set of same duplex configurations can be applicable to the full-duplex UE.

In a third approach, the uplink transmission interruption time resulting from the measurement gap is determined based upon the transceiver.

It is only necessary to tune one of transceivers for different frequencies/different systems without interrupting transmission of uplink/downlink data in cells supported by the other transceivers, so in the third approach, the base station device can determine the transceiver required to perform measurements and the aggregated cells served by the transceiver and determine the uplink transmission interruption time respectively for each aggregated cell served by the transceiver, and determine uplink transmission interruption time of aggregated cells served by other transceivers of the UE to be 0, that is, it is not necessary to determine the uplink transmission interruption time for the aggregated cells served by the other transceivers.

Furthermore, the process of determining, by the base station device, the transceiver required to perform measurements of the UE (i.e., a specific transceiver to be tuned) includes: when the UE and the base station device prescribe to tune the transceiver supporting the highest frequency, the base station device determines the transceiver at the highest frequency as the transceiver required to perform measurements of the UE; or, when the UE and the base station device prescribe to tune the transceiver supporting the lowest frequency, the base station device determines the transceiver at the lowest frequency as the transceiver required to perform measurements of the UE; or, when the base station device explicitly configures a transceiver to be tuned, the base station device obtains a correspondence relationship between bands supported by the UE and the transceivers, determines one of the transceivers as the transceiver required to perform measurements of the UE, and notifies the UE of information about the band corresponding to the transceiver required to perform measurements via the explicit configuration information.

It shall be noted that the process of obtaining, by the base station device, the correspondence relationship between bands supported by the UE and transceivers includes: the base station device obtains the correspondence relationship between bands supported by the UE and transceivers from the correspondence relationship between bands and transceivers reported in the UE capability, i.e., in an explicit manner; or the base station device obtains the correspondence relationship between bands supported by the UE and transceivers from the measurement gap capability reported based upon a band combination in the UE capability, i.e., in an implicit manner.

In the implicit manner, the measurement gap capability reported based upon band combination in the existing UE capability is restrained so that the base station device obtains implicitly the correspondence relationship between the transceivers and the bands or determines different transceivers for different bands by default. For example, for each band combination, if the UE has other transceivers available in addition to the transceiver corresponding to the cells contained in the band combination, then the measurement gap is not required when the measurement capability is reported based upon the band combination. In other situations, it is necessary to determine from the UE capability whether the measurement gap is required for the measurement.

In an embodiment of the invention, the base station device determines the uplink transmission interruption time of each aggregated cell served by the transceiver particularly as follows:

The base station device determines the uplink transmission interruption time resulting from the measurement gap over each aggregated cell served by the transceiver according to the duplex mode and/or TDD UL/DL configuration of each cell, and takes the determined uplink transmission interruption time as the uplink transmission interruption time of each cell; or

The base station device determines the uplink transmission interruption time resulting from the measurement gap over each of the aggregated cells served by the transceiver according to the duplex mode and/or TDD UL/DL configuration of each cell, and takes the union set of the uplink transmission interruption time over all the cells as the uplink transmission interruption time of each cell; or

The base station device determines the uplink transmission interruption time resulting from the measurement gap according to the reference duplex mode and/or TDD UL/DL configuration, and takes the uplink transmission interruption time as the uplink transmission interruption time of each aggregated cell served by the transceiver, where the reference duplex mode and/or TDD UL/DL configuration is any one of the following duplex modes and/or TDD UL/DL configurations:
1) A duplex mode and/or a TDD UL/DL configuration of a PCell;
2) A duplex mode and/or a TDD UL/DL configuration prescribed by the base station device and the UE;
3) A duplex mode and/or a TDD UL/DL configuration configured by an OAM entity; and
4) A duplex mode and/or a TDD UL/DL configuration notified by the base station device to the UE via an explicit signaling.

The explicit signaling can be RRC signaling, MAC signaling or physical layer signaling.

In an embodiment of the invention, in the process in which the base station device determines the uplink transmission interruption time of each of the aggregated cells served by the transceiver, the uplink transmission interruption time resulting from the measurement gap is associated with the duplex modes and the TDD UL/DL configurations of the cells corresponding to the transceiver or the reference duplex mode and TDD UL/DL configuration used by the cells corresponding to the transceiver. For FDD, the uplink transmission interruption time resulting from the measurement gap is MGL plus the first sub-frame subsequent to MGL. For TDD, if the sub-frame prior to the measurement gap is a DL sub-frame and the first sub-frame subsequent to the measurement gap is a UL sub-frame, then the uplink transmission interruption time resulting from the measurement gap is MGL plus the first sub-frame subsequent to MGL. In other situations, the uplink transmission interruption time resulting from the measurement gap is MGL.

It shall be noted that this approach of determining the uplink transmission interruption time resulting from the measurement gap based upon the transceiver can be applicable to the UE with a plurality of transceivers and supporting the full-duplex mode.

Operation 202: the base station device stops sending uplink transmission scheduling information during the uplink transmission interruption time of each cell aggregated by the UE to the UE over the cell. For the first approach above, the base station device stops sending the uplink transmission scheduling information during the uplink transmission interruption time of any one of the cells aggregated by the UE to the UE over all the aggregated cells without adopting different uplink transmission processes for different cells. For the second approach above, the base station device stops sending the uplink transmission scheduling information during the uplink transmission interruption time of each of the aggregated cells to the UE, which is required to process uplink transmission differently from one cell to another. For the third approach above, the base station device stops sending the uplink transmission scheduling information during the uplink transmission interruption time of the aggregated cells corresponding to the determined transceiver, which is required to adopt different uplink transmission processes for different cells.

In an embodiment of the invention, different duplex modes and/or different TDD UL/DL configurations can apply to the cells aggregated by the UE. For example, different duplex modes and/or different TDD UL/DL configurations can apply to at least two cells.

The embodiments of the invention will be described below in details in particular application scenarios.

### Second Embodiment

In the embodiment of the invention, the uplink transmission interruption time resulting from the measurement gap is determined based upon the UE. In this embodiment, the uplink transmission interruption time of each cell is a union set of the uplink transmission interruption time over all the cells aggregated by the UE.

It is assumed that two TDD cells, denoted respectively as Cell 1 and Cell 2, are aggregated by the UE, and the Cell 1 and the Cell 2 use the second TDD UL/DL configuration and the third TDD UL/DL configuration respectively. As per the UE capability reported by the UE, the UE operating in the current band combination needs the measurement gap when measuring at a frequency f, so the base station device needs to configure the measurement gap when configuring the UE to measure at the frequency f. However since the Cell 1 and the Cell 2 use the different TDD UL/DL configurations respectively, the uplink transmission interruption time over each of the Cell 1 and the Cell 2 can be determined respectively according to the mechanism of determining the uplink transmission interruption time resulting from the measurement gap.

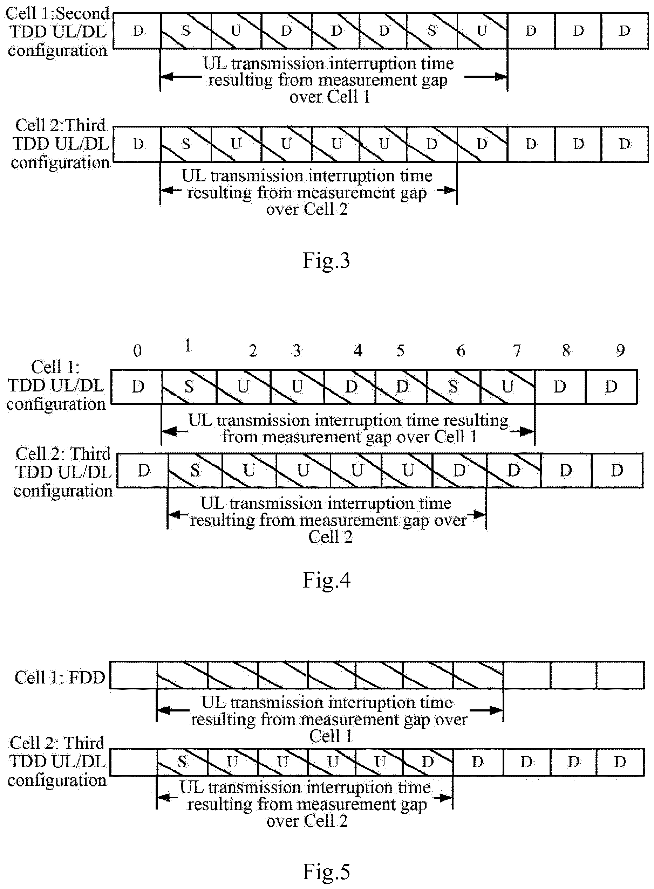

Fig.3 is a schematic diagram of determining uplink transmission interruption time over each of the Cell 1 and the Cell 2. As can be apparent from Fig.3, the uplink transmission interruption time resulting from the measurement gap over the Cell 1 is different from that over the Cell 2. Moreover in order to facilitate processing of the measurement gap by the base station device and to simplify the particular implementation of the base station device, the uplink transmission interruption time resulting from the measurement gap can be determined based upon the UE. A method for determining the uplink transmission interruption time resulting from the measurement gap based upon the UE is to take the union set of the uplink transmission interruption time of all the cells aggregated by the UE as the uplink transmission interruption time of each cell aggregated by the UE. Sub-frames denoted by diagonals in Fig.3 relate to the uplink transmission interruption time resulting from the measurement gap over the Cell 1.

The UE is not allowed for transmission of a PUSCH and/or a PUCCH (including a CQI/PMI/RI/SR/HARQ feedback) and/or an SRS and/or a PRACH, etc., during the uplink transmission interruption time. Moreover if there is a UL grant in the uplink transmission interruption time of some cell, then the UE can process the UL grant over the cell.

It shall be noted that the embodiment above has been described by way of an example where the union set of the uplink transmission interruption time of all the cells aggregated by the UE is taken as the uplink transmission interruption time of each cell aggregated by the UE. In other embodiments of the invention, the method for determining the uplink transmission interruption time resulting from the measurement gap based upon the UE can alternatively be modified to take the intersection set of the uplink transmission interruption time of all the cells aggregated by the UE as the uplink transmission interruption time of each cell aggregated by the UE, and in this case, the UE can be required to be provided with at least two transceivers.

### Third Embodiment

In the embodiment of the invention, the uplink transmission interruption time resulting from the measurement gap is determined based upon the UE. In this embodiment, the uplink transmission interruption time of each cell is a union set of the uplink transmission interruption time over all the cells aggregated by the UE, and the TDD cell adopts a dynamic UL/DL configuration.

It is assumed that two TDD cells, denoted respectively as a Cell 1 and a Cell 2, are aggregated by the UE and the Cell 1 adopts the dynamic TDD configuration. In one radio frame, the sub-frames 1 and 4 of the Cell 1 are fixed DL sub-frames, the sub-frame 2 is a fixed UL sub-frame, and the sub-frames 0 and 3 are dynamic sub-frames. The Cell 2 adopts the fixed third TDD UL/DL configuration. As per the UE capability reported by the UE, the UE operating in the current band combination needs the measurement gap when measuring at a frequency f, so the base station device needs to configure the measurement gap when configuring the UE to measure at the frequency f. However since the Cell 1 and the Cell 2 use the different TDD UL/DL configurations respectively, the uplink transmission interruption time over each of the Cell 1 and the Cell 2 can be determined respectively according to the mechanism of determining the uplink transmission interruption time resulting from the measurement gap.

Fig.4 is a schematic diagram of determining the uplink transmission interruption time over each of Cell 1 and Cell 2. Since the Cell 2 adopts the fixed TDD UL/DL configuration, there is a fixed uplink transmission interruption time resulting from the measurement gap. For the Cell 1, however, if the sub-frames 0, 3, 5 and 8 are sub-frames of which transmission directions can be determined dynamically, then the sub-frame 0 and the sub-frame 8 are considered as downlink sub-frames because a PDCCH is received therein, and the sub-frame 3 and the sub-frame 5 are considered as uplink sub-frames because no PDCCH is received therein. Moreover a downlink sub-frame is prior to the measurement gap and a UL sub-frame is subsequent to the measurement gap, so the uplink transmission interruption time resulting from the measurement gap over the Cell 1 is longer than the uplink transmission interruption time resulting from the measurement gap over the cell 2 by 1ms.

As can be apparent from Fig.4, the uplink transmission interruption time resulting from the measurement gap over the Cell 1 is different from that over the Cell 2. Moreover in order to facilitate processing of the measurement gap by the base station device and to simplify the particular implementation of the base station device, the uplink transmission interruption time resulting from the measurement gap can be determined based upon the UE. A method for determining the uplink transmission interruption time resulting from the measurement gap based upon the UE is to take a union set of uplink transmission interruption time of all the cells aggregated by the UE as the uplink transmission interruption time of each cell aggregated by the UE. Sub-frames denoted by diagonals in Fig.4 relate to the uplink transmission interruption time resulting from the measurement gap over the Cell 1.

The UE is not allowed for transmission of a PUSCH and/or a PUCCH (including a CQI/PMI/RI/SR/HARQ feedback) and/or an SRS and/or a PRACH, etc., during the uplink transmission interruption time. Moreover if there is a UL grant in the uplink transmission interruption time of some cell, then the UE can process the UL grant over the cell.

It shall be noted that the embodiment above has been described by way of an example where the union set of the uplink transmission interruption time of all the cells aggregated by the UE is taken as the uplink transmission interruption time of each cell aggregated by the UE. In other embodiments of the invention, the method for determining the uplink transmission interruption time resulting from the measurement gap based upon the UE can alternatively be modified to take the intersection set of the uplink transmission interruption time of all the cells aggregated by the UE as the uplink transmission interruption time of each cell aggregated by the UE, and in this case, the UE can be required to be provided with at least two transceivers.

### Fourth Embodiment

In the embodiment of the invention, the uplink transmission interruption time resulting from the measurement gap is determined based upon the set of same duplex configurations (and also the same UL/DL configurations for TDD).

It is assumed that two cells, denoted respectively as Cell 1 and Cell 2, are aggregated by a UE, and the Cell 1 and the Cell 2 use the FDD and the third TDD UL/DL configuration respectively. As per the UE capability reported by the UE, the UE needs the measurement gap when measuring at a frequency f when both the Cell 1 and the Cell 2 are aggregated by the UE. Thus the base station device needs to configure the measurement gap when configuring the UE to measure at the frequency f. However since the Cell 1 and the Cell 2 use the different duplex modes respectively, the uplink transmission interruption time over each of the Cell 1 and the Cell 2 can be determined respectively in the mechanism of determining the uplink transmission interruption time resulting from the measurement gap.

Fig.5 is a schematic diagram of determining the uplink transmission interruption time over each of the Cell 1 and the Cell 2. As can be apparent from Fig.5, the uplink transmission interruption time resulting from the measurement gap over the Cell 1 is different from that over the Cell 2. Thus in view of the influence of the measurement gap on uplink data transmission, if the UE supports the full-duplex mode and uplink transmission is allowed to be processed differently for the different cells, then the transmission of PUCCH/PUSCH/SRS/PRACH over the Cell 1 is not allowed to be performed in the sub-frames denoted by diagonals over the Cell 1, whereas the transmission of PUCCH/PUSCH/SRS/PRACH over the Cell 2 is not allowed to be performed in the sub-frames denoted by diagonals over the Cell 2.

### Fifth Embodiment

In the embodiment of the invention, when the influence of the measurement gap on the uplink transmission is determined, the factor of a plurality of transceivers is taken into account, e.g., an implicitly reported correspondence relationship between bands and transceivers.

It is assumed that two cells, denoted respectively as Cell 1 and Cell 2, are aggregated by the UE, the Cell 1 and the Cell 2 use the FDD and the third TDD UL/DL configuration respectively, and the Cell 1 and the Cell 2 use separate transceivers respectively. When the UE reports the UE capability, the UE reports the correspondence relationship between bands and transceivers to the base station device, for example, the band 1 corresponding to the Cell 1 relates to the transceiver 1, and the band 2 corresponding to the Cell 2 relates to the transceiver 2.

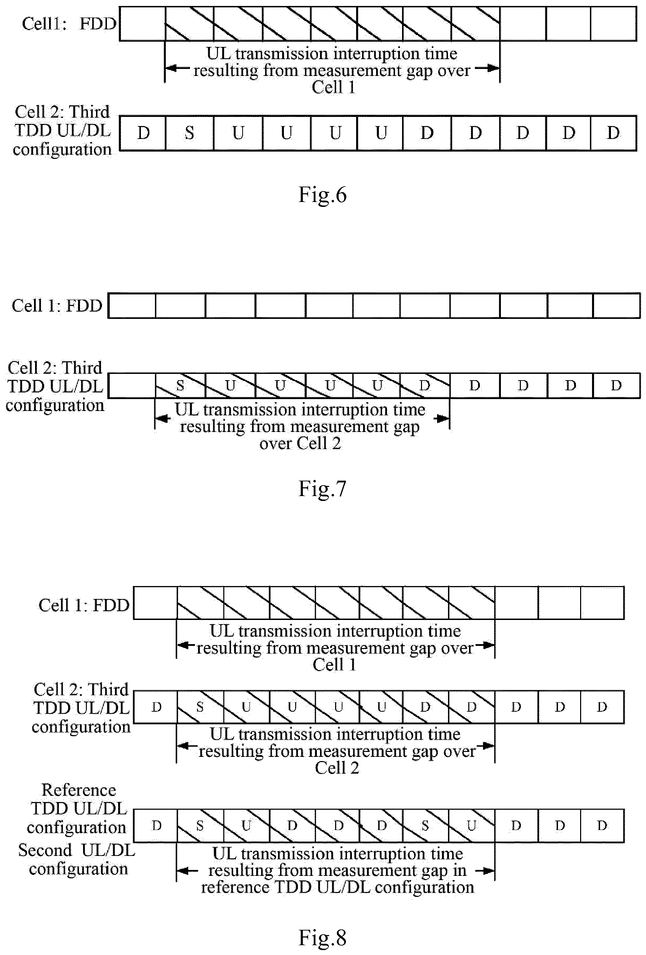

The base station device needs to take into account the UE capability reported by the UE when configuring measurements at different frequencies or in different systems. If the reported UE capability indicates that the UE in the current operating band combination needs the measurement gap when measuring at a frequency f, then the base station device needs to configure the measurement gap when configuring the UE to measure at the frequency f. If the UE is provided with a plurality of transceivers and supports the full-duplex mode, then although the base station device configures the measurement gap, the UE only needs to tune one of the transceivers for measurement at different frequencies or in different systems, that is, the UE only needs to interrupt uplink/downlink data transmission of the transceiver without any influence upon uplink/downlink data transmission of the other transceivers. For example, if the data transmission of the transceiver 1 is interrupted, then the base station device can schedule the Cell 2 normally to perform the uplink/downlink data transmission during the measurement gap. Fig.6 is a schematic diagram of determining the uplink transmission interruption time over the Cell 1.

It shall be noted that the base station device and the UE can prescribe a specific one of the plurality of transceivers with transmission thereof to be interrupted, for example, the transceiver supporting the lowest or the highest frequency is interrupted, or the base station device can configure a transceiver to be interrupted in explicit signaling (RRC/MACK/L1).

### Sixth Embodiment

In the embodiment of the invention, when the influence of the measurement gap on the uplink transmission is determined, the factor of a plurality of transceivers is taken into account, e.g., an implicitly reported correspondence relationship between bands and transceivers.

It is assumed that two cells, denoted respectively as Cell 1 and Cell 2, are aggregated by the UE. The Cell 1 and the Cell 2 are located in the band 1 and the band 2 respectively, and use the FDD and the third TDD UL/DL configuration respectively. When reporting the UE capability, the UE reports no need of the measurement gap as reporting the measurement capability at a frequency f for the band 1, and reports no need of the measurement gap as reporting the measurement capability at the frequency f for the band 2, but reports a need of the measurement gap as reporting the measurement capability at the frequency f for the combination of the band 1 and the band 2. The base station device can determine implicitly from the reported UE capability the correspondence relationship between bands and transceivers, i.e., different transceivers respectively for the Cell 1 and the Cell 2.

The base station device needs take into account the UE capability reported by the UE when configuring measurements at different frequencies or in different systems. If the reported UE capability indicates that the UE in the current operating band combination needs the measurement gap when measuring at the frequency f, then the base station device needs to configure the measurement gap when configuring the UE to measure at the frequency f. If the UE is provided with a plurality of transceivers and supports the full-duplex mode, then although the base station device configures the measurement gap, the UE only needs to tune one of the transceivers for measurement at different frequencies or in different systems, that is, the UE only needs to interrupt uplink/downlink data transmission of the transceiver without any influence upon uplink/downlink data transmission of the other transceivers. For example, if the data transmission of the transceiver 2 is interrupted, then the base station device can schedule the Cell 1 normally to perform the uplink/downlink data transmission during the measurement gap. Fig.7 is a schematic diagram of determining the uplink transmission interruption time over the Cell 2.

It shall be noted that the base station device and the UE can prescribe a specific one of the plurality of transceivers with transmission thereof to be interrupted, for example, the transceiver supporting the lowest or the highest frequency is interrupted, or the base station device can configure a transceiver or a cell to be interrupted in explicit signaling (RRC/MACK/L1).

### Seventh Embodiment

In the embodiment of the invention, the uplink transmission interruption time resulting from the measurement gap is determined based upon the UE, where the reference TDD UL/DL configuration is used for determining the uplink transmission interruption time resulting from the measurement gap.

It is assumed that two cells, denoted respectively as Cell 1 and Cell 2, are aggregated by the UE, and the Cell 1 and the Cell 2 use the FDD and the third TDD UL/DL configuration respectively. As per the UE capability reported by the UE, when both the Cell 1 and the Cell 2 are .aggregated by the UE, the measurement gap is necessary to measure at a frequency f. Thus the base station device needs to configure the measurement gap when configuring the UE to measure at the frequency f. However since the Cell 1 and the Cell 2 use the different duplex modes respectively, the uplink transmission interruption time resulting from the measurement gap is determined according to the reference TDD UL/DL configuration (e.g., the second TDD UL/DL configuration) and taken as the uplink transmission interruption time over each of the Cell 1 and the Cell 2, as illustrated in Fig.8.

The UE is not allowed for transmission of a PUSCH and/or a PUCCH (including a CQI/PMI/RI/SR/HARQ feedback) and/or an SRS and/or a PRACH, etc., during the uplink transmission interruption time. Moreover, if there is a UL grant in the uplink transmission interruption time of some cell, then the UE can process the UL grant over the cell.

### Eighth Embodiment

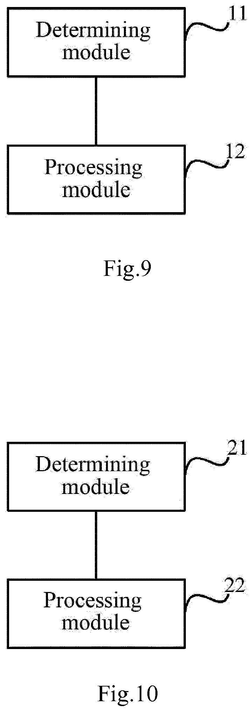

Based upon the same inventive idea as the methods described above, an embodiment of the invention further provides a UE. As illustrated in Fig. 9, the UE includes:
A determining module 11 configured to determine uplink transmission interruption time of each cell aggregated by the UE; and
A processing module 12 configured to stop, during the uplink transmission interruption time of each cell aggregated by the UE, uplink transmission of the cell.

The determining module 11 is particularly configured to determine uplink transmission interruption time corresponding to all cells aggregated by the UE as the uplink transmission interruption time of each cell; or to determine the uplink transmission interruption time respectively for each cell aggregated by the UE; or to determine a transceiver required to perform measurements and aggregated cells served by the transceiver, to determine uplink transmission interruption time of the respective aggregated cells served by the transceiver, and to determine uplink transmission interruption time of aggregated cells served by other transceivers of the UE to be 0.

The determining module 11 is configured to determine uplink transmission interruption time resulting from a measurement gap over each cell aggregated by the UE according to a duplex mode and/or TDD UL/DL configuration of the each cell, and to determine a union set or an intersection set of the uplink transmission interruption time over all cells as the uplink transmission interruption time of the each cell; or to determine the uplink transmission interruption time of each cell to be a Measurement Gap Length (MGL) plus a specified value; or to determine uplink transmission interruption time resulting from a measurement gap according to a reference duplex mode and/or TDD UL/DL configuration, and to take the uplink transmission interruption time as the uplink transmission interruption time of the each cell.

The determining module 11 is configured to determine the uplink transmission interruption time respectively for each cell based upon a set of duplex configurations to which the each cell belongs, where the set of duplex configurations includes at least one aggregated cell, and when the set of duplex configurations includes a plurality of cells, the plurality of cells have a same duplex mode and/or TDD UL/DL configuration.

The determining module 11 is configured to determine uplink transmission interruption time according to a duplex mode and/or TDD UL/DL configuration in the set of duplex configurations, and to take the uplink transmission interruption time as the uplink transmission interruption time of each cell in the set of duplex configurations; or to determine uplink transmission interruption time according to a reference duplex mode and/or TDD UL/DL configuration in the set of duplex configurations, and to take the uplink transmission interruption time as the uplink transmission interruption time of each cell in the set of duplex configurations.

The determining module 11 is configured to determine a transceiver at a highest frequency as the transceiver required to perform the measurements; or to determine a transceiver at a lowest frequency as the transceiver required to perform the measurements; or to receive explicit configuration information from a base station device to indicate a band corresponding to the transceiver required to perform the measurements, and to determine a transceiver corresponding to the band as the transceiver required to perform the measurements.

The determining module 11 is configured to determine uplink transmission interruption time resulting from a measurement gap over each aggregated cell served by the transceiver according to a duplex mode and/or TDD UL/DL configuration of the each cell, and to take the determined uplink transmission interruption time as the uplink transmission interruption time corresponding to the each cell; or

To determine uplink transmission interruption time resulting from a measurement gap over each aggregated cell served by the transceiver according to a duplex mode and/or TDD UL/DL configuration of the each cell, and to take a union set of the uplink transmission interruption time over the respective cells as the uplink transmission interruption time of the each cell; or

To determine uplink transmission interruption time resulting from a measurement gap according to a reference duplex mode and/or TDD UL/DL configuration, and to take the uplink transmission interruption time as the uplink transmission interruption time of the respective aggregated cells served by the transceiver.

In an embodiment of the invention, the reference duplex mode and/or TDD UL/DL configuration particularly includes:
A duplex mode and/or a TDD UL/DL configuration of a PCell; or
A duplex mode and/or a TDD UL/DL configuration prescribed by the base station device and the UE; or
A duplex mode and/or a TDD UL/DL configuration configured by an OAM; or
A duplex mode and/or a TDD UL/DL configuration notified by the base station device to the UE via an explicit signaling.

The processing module 12 is particularly configured to stop, during the uplink transmission interruption time of each cell aggregated by the UE, transmitting one or any combination of the following information over the cell: a PUSCH, a PUCCH, a PRACH and an SRS. The PUCCH includes one or any combination of the following information: a CQI, a PMI, an RI, an SR and an HARQ feedback.

In an embodiment of the invention, the cells aggregated by the UE use different duplex modes and/or different TDD UL/DL configurations.

In this case, the respective modules of the device according to the invention can be integrated or can be deployed separately. The modules above can be combined into one module or can be further divided into a plurality of sub-modules.

### Ninth Embodiment

Based upon the same inventive idea as the methods described above, an embodiment of the invention further provides a base station device, and as illustrated in Fig. 10, the base station device includes:
A determining module 21 configured to determine uplink transmission interruption time of each cell aggregated by a UE; and
A processing module 22 configured to stop sending uplink transmission scheduling information during the uplink transmission interruption time of each cell aggregated by the UE to the UE over the cell.

The determining module 21 is particularly configured to determine uplink transmission interruption time corresponding to all cells aggregated by the UE as the uplink transmission interruption time of each cell; or to determine the uplink transmission interruption time respectively for each cell aggregated by the UE; or to determine a transceiver required to perform measurements of the UE and aggregated cells served by the transceiver, to determine uplink transmission interruption time of the respective aggregated cells served by the transceiver, and to determine uplink transmission interruption time of aggregated cells served by other transceivers of the UE to be 0.

The determining module 21 is configured to determine uplink transmission interruption time resulting from a measurement gap over each cell aggregated by the UE according to a duplex mode and/or TDD UL/DL configuration of the each cell, and to determine a union set or an intersection set of the uplink transmission interruption time over all cells as the uplink transmission interruption time of the each cell; or to determine the uplink transmission interruption time of each cell to be a Measurement Gap Length (MGL) plus a specified value; or to determine uplink transmission interruption time resulting from a measurement gap according to a reference duplex mode and/or TDD UL/DL configuration, and to take the uplink transmission interruption time as the uplink transmission interruption time of the each cell.

The determining module 21 is configured to determine the uplink transmission interruption time respectively for each cell aggregated by the UE based upon a set of duplex configurations to which the each cell belongs, where the set of duplex configurations includes at least one aggregated cell, and when the set of duplex configurations includes a plurality of cells, the plurality of cells have a same duplex mode and/or TDD UL/DL configuration.

The determining module 21 is configured to determine uplink transmission interruption time according to a duplex mode and/or TDD UL/DL configuration in the set of duplex configurations, and to take the uplink transmission interruption time as the uplink transmission interruption time of each cell in the set of duplex configurations; or to determine uplink transmission interruption time according to a reference duplex mode and/or TDD UL/DL configuration in the set of duplex configurations, and to take the uplink transmission interruption time as the uplink transmission interruption time of each cell in the set of duplex configurations.

The determining module 21 is configured to determine a transceiver at a highest frequency as the transceiver required to perform the measurements of the UE; or to determine a transceiver at a lowest frequency as the transceiver required to perform the measurements of the UE; or to obtain a correspondence relationship between bands supported by the UE and transceivers, to determine one of a plurality of transceivers as the transceiver required to perform the measurements of the UE, and to notify the UE of information about a band corresponding to the transceiver required to perform the measurements via explicit configuration information.

The determining module 21 is further configured to obtain the correspondence relationship between bands supported by the UE and transceivers from a correspondence relationship between bands and transceivers reported in the UE capability; or to obtain the correspondence relationship between bands supported by the UE and transceivers from a measurement gap capability reported based upon a band combination in the UE capability.

The determining module 21 is further configured to determine uplink transmission interruption time resulting from a measurement gap over each aggregated cell served by the transceiver according to a duplex mode and/or TDD UL/DL configuration of the each cell, and to take the determined uplink transmission interruption time as the uplink transmission interruption time corresponding to the each cell; or

To determine uplink transmission interruption time resulting from a measurement gap over each aggregated cell served by the transceiver according to a duplex mode and/or TDD UL/DL configuration of the each cell, and to take a union set of the uplink transmission interruption time over all the cells aggregated by the UE as the uplink transmission interruption time of each cell; or

To determine uplink transmission interruption time resulting from a measurement gap according to a reference duplex mode and/or TDD UL/DL configuration, and to take the uplink transmission interruption time as the uplink transmission interruption time of the respective aggregated cells served by the transceiver.

In an embodiment of the invention, the reference duplex mode and/or TDD UL/DL configuration particularly includes:
A duplex mode and/or a TDD UL/DL configuration of a PCell;
A duplex mode and/or a TDD UL/DL configuration prescribed by the base station device and the UE;
A duplex mode and/or a TDD UL/DL configuration configured by an OAM; and
A duplex mode and/or a TDD UL/DL configuration determined and notified by the base station device to the UE via an explicit signaling.

In an embodiment of the invention, the cells aggregated by the UE use different duplex modes and/or different TDD UL/DL configurations.

In this case, the respective modules of the device according to the invention can be integrated or can be deployed separately. The modules above can be combined into one module or can be further divided into a plurality of sub-modules.

Those skilled in the art can clearly appreciate from the foregoing description of the embodiments that the invention can be implemented in software plus a necessary general hardware platform or, of course, in hardware, although the former implementation is preferred in many cases. Based upon such understanding, the technical solutions of the invention in essence or the part thereof contributing to the prior art can be embodied in the form of a software product which can be stored in a storage medium and which includes several instructions to cause a computer device (e.g., a personal computer, a server, a network device, etc.) to perform the methods according to the respective embodiments of the invention.

Those skilled in the art can appreciate that the drawings are merely schematic diagrams of the preferred embodiments of the invention, and the modules or the operations in the drawings may not be necessary to implement the invention.

Those skilled in the art can appreciate that the modules in the devices of the embodiments can be distributed in the devices of the embodiments as described in the embodiments or located in one or more devices different from those of the embodiments given corresponding variations. The modules of the foregoing embodiments can be integrated together or deployed separately or can be combined into one module or further subdivided into a plurality of sub-modules.

The embodiments of the invention have been numbered only for the sake of description but will not suggest any superiority of one embodiment to another.

## Claims

1. A method for determining uplink transmission interruption time, the method comprises:
a User Equipment, UE, determining (101) uplink transmission interruption time of each cell aggregated by the UE, according to a measurement gap configuration, wherein respective cells aggregated by the UE are in different duplex modes or have different TDD UL/DL configurations; and
the UE stopping (102), during the uplink transmission interruption time of each cell aggregated by the UE, uplink transmission of the cell.

2. The method according to claim 1, wherein the UE determining the uplink transmission interruption time of each cell aggregated by the UE comprises:
the UE determining uplink transmission interruption time corresponding to all cells aggregated by the UE as the uplink transmission interruption time of each cell; or
the UE determining the uplink transmission interruption time respectively for each cell aggregated by the UE; or
the UE determining a transceiver required to perform measurements and aggregated cells served by the transceiver, determining uplink transmission interruption time of the respective aggregated cells served by the transceiver, and determining uplink transmission interruption time of aggregated cells served by other transceivers of the UE to be 0.

3. The method according to claim 2, wherein the UE determining the uplink transmission interruption time corresponding to all the cells aggregated by the UE as the uplink transmission interruption time of each cell comprises:
the UE determining uplink transmission interruption time resulting from a measurement gap over each cell aggregated by the UE according to a duplex mode and/or Time Division Duplex, TDD, uplink/downlink, UL/DL, configuration of the each cell, and determining a union set or an intersection set of the uplink transmission interruption time over all cells as the uplink transmission interruption time of the each cell; or
the UE determining the uplink transmission interruption time of each cell to be a Measurement Gap Length, MGL, plus a specified value; or
the UE determining uplink transmission interruption time resulting from a measurement gap according to a reference duplex mode and/or TDD UL/DL configuration, and taking the uplink transmission interruption time as the uplink transmission interruption time of the each cell.

4. The method according to claim 2, wherein the UE determining the uplink transmission interruption time respectively for each cell aggregated by the UE comprises:
the UE determining the uplink transmission interruption time respectively for each cell based upon a set of duplex configurations to which the each cell belongs, wherein the set of duplex configurations includes at least one aggregated cell, and when the set of duplex configurations includes a plurality of cells, the plurality of cells have a same duplex mode and/or TDD UL/DL configuration;
wherein the UE determining the uplink transmission interruption time respectively for each cell based upon the set of duplex configurations to which the each cell belongs comprises:
the UE determining uplink transmission interruption time according to a duplex mode and/or TDD UL/DL configuration in the set of duplex configurations, and taking the uplink transmission interruption time as the uplink transmission interruption time of each cell in the set of duplex configurations; or
the UE determining uplink transmission interruption time according to a reference duplex mode and/or TDD UL/DL configuration in the set of duplex configurations, and taking the uplink transmission interruption time as the uplink transmission interruption time of each cell in the set of duplex configurations.

5. The method according to claim 2, wherein the UE determining the transceiver required to perform the measurements comprises:
the UE determining a transceiver at a highest frequency as the transceiver required to perform the measurements; or
the UE determining a transceiver at a lowest frequency as the transceiver required to perform the measurements; or
the UE receiving explicit configuration information from a base station device to indicate a band corresponding to the transceiver required to perform the measurements, and determining a transceiver corresponding to the band as the transceiver required to perform the measurements.

6. The method according to claim 2, wherein the UE determining the uplink transmission interruption time of the respective aggregated cells served by the transceiver comprises:
the UE determining uplink transmission interruption time resulting from a measurement gap over each aggregated cell served by the transceiver according to a duplex mode and/or TDD UL/DL configuration of the each cell, and taking the determined uplink transmission interruption time as the uplink transmission interruption time corresponding to the each cell; or
the UE determining uplink transmission interruption time resulting from a measurement gap over each aggregated cell served by the transceiver according to a duplex mode and/or TDD UL/DL configuration of the each cell, and taking a union set of the uplink transmission interruption time over the respective cells as the uplink transmission interruption time of the each cell; or
the UE determining uplink transmission interruption time resulting from a measurement gap according to a reference duplex mode and/or TDD UL/DL configuration, and taking the uplink transmission interruption time as the uplink transmission interruption time of the respective aggregated cells served by the transceiver.

7. A method for determining uplink transmission interruption time, the method comprises:
a base station device determining (201) uplink transmission interruption time of each cell aggregated by a User Equipment, UE, according to a measurement gap configuration, wherein respective cells aggregated by the UE are in different duplex modes or have different TDD UL/DL configurations; and
the base station device stopping (202) sending uplink transmission scheduling information during the uplink transmission interruption time of each cell aggregated by the UE to the UE over the cell.

8. The method according to claim 7, wherein the base station device determining the uplink transmission interruption time of each cell aggregated by the UE comprises:
the base station device determining uplink transmission interruption time corresponding to all cells aggregated by the UE as the uplink transmission interruption time of each cell; or
the base station device determining the uplink transmission interruption time respectively for each cell aggregated by the UE; or
the base station device determining a transceiver required to perform measurements of the UE and aggregated cells served by the transceiver, determining uplink transmission interruption time of the respective aggregated cells served by the transceiver, and determining uplink transmission interruption time of aggregated cells served by other transceivers of the UE to be 0.

9. The method according to claim 8, wherein the base station device determining the uplink transmission interruption time corresponding to all the cells aggregated by the UE as the uplink transmission interruption time of each cell comprises:
the base station device determining uplink transmission interruption time resulting from a measurement gap over each cell aggregated by the UE according to a duplex mode and/or Time Division Duplex, TDD, uplink/downlink, UL/DL, configuration of the each cell, and determining a union set or an intersection set of the uplink transmission interruption time over all cells as the uplink transmission interruption time of the each cell; or
the base station device determining the uplink transmission interruption time of each cell to be a Measurement Gap Length, MGL, plus a specified value; or
the base station device determining uplink transmission interruption time resulting from a measurement gap according to a reference duplex mode and/or TDD UL/DL configuration, and taking the uplink transmission interruption time as the uplink transmission interruption time of the each cell.

10. The method according to claim 8, wherein the base station device determining the uplink transmission interruption time respectively for each cell aggregated by the UE comprises:
the base station device determining the uplink transmission interruption time respectively for each cell aggregated by the UE based upon a set of duplex configurations to which the each cell belongs, wherein the set of duplex configurations includes at least one aggregated cell, and when the set of duplex configurations includes a plurality of cells, the plurality of cells have a same duplex mode and/or TDD UL/DL configuration;
wherein the base station device determining the uplink transmission interruption time respectively for each cell aggregated by the UE based upon the set of duplex configurations to which the each cell belongs comprises:
the base station device determining uplink transmission interruption time according to a duplex mode and/or TDD UL/DL configuration in the set of duplex configurations, and taking the uplink transmission interruption time as the uplink transmission interruption time of each cell in the set of duplex configurations; or
the base station device determining uplink transmission interruption time according to a reference duplex mode and/or TDD UL/DL configuration in the set of duplex configurations, and taking the uplink transmission interruption time as the uplink transmission interruption time of each cell in the set of duplex configurations.

11. The method according to claim 8, wherein the base station device determining the transceiver required to perform the measurements of the UE comprises:
the base station device determining a transceiver at a highest frequency as the transceiver required to perform the measurements of the UE; or
the base station device determining a transceiver at a lowest frequency as the transceiver required to perform the measurements of the UE; or
the base station device obtaining a correspondence relationship between bands supported by the UE and transceivers, determining one of a plurality of transceivers as the transceiver required to perform the measurements of the UE, and notifying the UE of information about a band corresponding to the transceiver required to perform the measurements via explicit configuration information.

12. The method according to claim 11, wherein the base station device obtaining the correspondence relationship between bands supported by the UE and transceivers comprises:
the base station device obtaining the correspondence relationship between bands supported by the UE and transceivers from a correspondence relationship between bands and transceivers reported in a UE capability; or
the base station device obtaining the correspondence relationship between bands supported by the UE and transceivers from a measurement gap capability reported based upon a band combination in a UE capability.

13. The method according to claim 8, wherein the base station device determining the uplink transmission interruption time of the respective aggregated cells served by the transceiver comprises:
the base station device determining uplink transmission interruption time resulting from a measurement gap over each aggregated cell served by the transceiver according to a duplex mode and/or TDD UL/DL configuration of the each cell, and taking the determined uplink transmission interruption time as the uplink transmission interruption time corresponding to the each cell; or
the base station device determining uplink transmission interruption time resulting from a measurement gap over each aggregated cell served by the transceiver according to a duplex mode and/or TDD UL/DL configuration of the each cell, and taking a union set of the uplink transmission interruption time over the respective cells as the uplink transmission interruption time of the each cell; or
the base station device determining uplink transmission interruption time resulting from a measurement gap according to a reference duplex mode and/or TDD UL/DL configuration, and taking the uplink transmission interruption time as the uplink transmission interruption time of the respective aggregated cells served by the transceiver.

14. A User Equipment, UE, the UE comprises:
a determining module (11) configured to determine uplink transmission interruption time of each cell aggregated by the UE, according to a measurement gap configuration, wherein respective cells aggregated by the UE are in different duplex modes or have different TDD UL/DL configurations; and
a processing module (12) configured to stop, during the uplink transmission interruption time of each cell aggregated by the UE, uplink transmission of the cell.

15. A base station device, the base station device comprises:
a determining module (21) configured to determine uplink transmission interruption time of each cell aggregated by a User Equipment, UE, according to a measurement gap configuration, wherein respective cells aggregated by the UE are in different duplex modes or have different TDD UL/DL configurations; and
a processing module (22) configured to stop sending uplink transmission scheduling information during the uplink transmission interruption time of each cell aggregated by the UE to the UE over the cell.

## Patentansprüche

1. Verfahren zur Bestimmung der Unterbrechungszeit einer Uplink-Übertragung, mit:
der Bestimmung (101) durch ein Endgerät, UE, der Unterbrechungszeit einer Uplink-Übertragung jeder durch das UE kumulierten Zelle gemäß einer Messlückenkonfiguration, wobei entsprechende, durch das UE kumulierte Zellen in unterschiedlichen Duplexmodi vorliegen oder unterschiedliche TDD UL/DL Konfigurationen aufweisen; und
dem Anhalten (102) durch das UE der Uplink-Übertragung der Zelle während der Unterbrechungszeit einer Uplink-Übertragung jeder durch das UE kumulierten Zelle.

2. Verfahren nach Anspruch 1, wobei die Bestimmung durch das UE der Unterbrechungszeit einer Uplink-Übertragung jeder durch das UE kumulierten Zelle Folgendes umfasst:
die Bestimmung durch das UE der Unterbrechungszeit einer Uplink-Übertragung entsprechend aller durch das UE kumulierten Zellen als die Unterbrechungszeit einer Uplink-Übertragung jeder Zelle; oder
die Bestimmung durch das UE der Unterbrechungszeit einer Uplink-Übertragung jeweils für jede durch das UE kumulierte Zelle; oder
die Bestimmung durch das UE eines zur Durchführung von Messungen erforderlichen Transceivers und von durch den Transceiver bedienten, kumulierten Zellen, die Bestimmung der Unterbrechungszeit einer Uplink-Übertragung der entsprechenden durch den Transceiver bedienten kumulierten Zellen, sowie die Bestimmung der Unterbrechungszeit einer Uplink-Übertragung von kumulierten Zellen, die von anderen Transceivern des UE bedient werden, derart, dass sie 0 beträgt.

3. Verfahren nach Anspruch 2, wobei die Bestimmung durch das UE der Unterbrechungszeit einer Uplink-Übertragung entsprechend aller durch das UE kumulierten Zellen als die Unterbrechungszeit einer Uplink-Übertragung jeder Zelle Folgendes umfasst:
die Bestimmung durch das UE der Unterbrechungszeit einer Uplink-Übertragung, die sich aus einer Messlücke über jeder durch das UE kumulierten Zelle gemäß einem Duplexmodus und/oder einer Zeitduplex-, TDD, Uplink/Downlink-, UL/DL, Konfiguration jeder Zelle ergibt, und die Bestimmung eines Vereinigungssatzes oder eines Schnittmengensatzes der Unterbrechungszeit einer Uplink-Übertragung über alle Zellen als die Unterbrechungszeit einer Uplink-Übertragung jeder Zelle; oder
die Bestimmung durch das UE der Unterbrechungszeit einer Uplink-Übertragung jeder Zelle als eine Messlückenlänge, MGL, zuzüglich eines festgelegten Wertes; oder
die Bestimmung durch das UE der Unterbrechungszeit einer Uplink-Übertragung, die sich aus einer Messlücke gemäß einem Bezugsduplexmodus und/oder einer TDD UL/DL Konfiguration ergibt, und die Annahme der Unterbrechungszeit einer Uplink-Übertragung als die Unterbrechungszeit einer Uplink-Übertragung jeder Zelle.

4. Verfahren nach Anspruch 2, wobei die Bestimmung durch das UE der Unterbrechungszeit einer Uplink-Übertragung jeweils für jede durch das UE kumulierte Zelle Folgendes umfasst:
die Bestimmung durch das UE der Unterbrechungszeit einer Uplink-Übertragung jeweils für jede Zelle auf der Basis eines Satzes von Duplexkonfigurationen, zu welchen die jeweilige Zelle gehört, wobei der Satz von Duplexkonfigurationen mindestens eine kumulierte Zelle aufweist, und, wenn der Satz von Duplexkonfigurationen mehrere Zellen aufweist, die mehreren Zellen einen gleichen Duplexmodus und/oder eine gleiche TDD UL/DL Konfiguration aufweisen;
wobei die Bestimmung durch das UE der Unterbrechungszeit einer Uplink-Übertragung jeweils für jede Zelle auf der Basis des Satzes von Duplexkonfigurationen, zu welchen die jeweilige Zelle gehört, Folgendes umfasst:
die Bestimmung durch das UE der Unterbrechungszeit einer Uplink-Übertragung gemäß einem Duplexmodus und/oder einer TDD UL/DL Konfiguration in dem Satz von Duplexkonfigurationen, und die Annahme der Unterbrechungszeit einer Uplink-Übertragung als die Unterbrechungszeit einer Uplink-Übertragung jeder Zelle in dem Satz von Duplexkonfigurationen; oder
die Bestimmung durch das UE der Unterbrechungszeit einer Uplink-Übertragung gemäß einem Bezugsduplexmodus und/oder einer TDD UL/DL Konfiguration in dem Satz von Duplexkonfigurationen, und die Annahme der Unterbrechungszeit einer Uplink-Übertragung als die Unterbrechungszeit einer Uplink-Übertragung jeder Zelle in dem Satz von Duplexkonfigurationen.

5. Verfahren nach Anspruch 2, wobei die Bestimmung durch das UE des zur Durchführung der Messungen erforderlichen Transceivers Folgendes umfasst:
die Bestimmung durch das UE eines Transceivers mit einer höchsten Frequenz als den zur Durchführung der Messungen erforderlichen Transceiver; oder
die Bestimmung durch das UE eines Transceivers mit einer niedrigsten Frequenz als den zur Durchführung der Messungen erforderlichen Transceiver; oder
das Empfangen durch das UE von eindeutigen Konfigurationsinformationen von einem Basisstationsgerät zur Anzeige eines Frequenzbereiches entsprechend dem zur Durchführung der Messungen erforderlichen Transceiver, und Bestimmen eines dem Frequenzbereich entsprechenden Transceivers als dem zur Durchführung der Messungen erforderlichen Transceiver.

6. Verfahren nach Anspruch 2, wobei die Bestimmung durch das UE der Unterbrechungszeit einer Uplink-Übertragung der jeweiligen kumulierten Zellen, die von dem Transceiver bedient werden, Folgendes umfasst:
die Bestimmung durch das UE der Unterbrechungszeit einer Uplink-Übertragung, die sich aus einer Messlücke über jeder von dem Transceiver bedienten kumulierten Zelle gemäß einem Duplexmodus und/oder einer TDD UL/DL Konfiguration der jeweiligen Zelle ergibt, und die Annahme der bestimmten Unterbrechungszeit einer Uplink-Übertragung als die Unterbrechungszeit einer Uplink-Übertragung entsprechend der jeder Zelle; oder
die Bestimmung durch das UE der Unterbrechungszeit einer Uplink-Übertragung, die sich aus einer Messlücke über jeder von dem Transceiver bedienten kumulierten Zelle gemäß einem Duplexmodus und/oder einer TDD UL/DL Konfiguration jeder Zelle ergibt, und die Annahme eines Vereinigungssatzes der Unterbrechungszeit einer Uplink-Übertragung über den entsprechenden Zellen als die Unterbrechungszeit einer Uplink-Übertragung jeder Zelle; oder
Die Bestimmung durch das UE der Unterbrechungszeit einer Uplink-Übertragung, die sich aus einem Messspalt gemäß einem Bezugsduplexmodus und/oder einer TDD UL/DL Konfiguration ergibt, und die Annahme der Unterbrechungszeit einer Uplink-Übertragung als die Unterbrechungszeit einer Uplink-Übertragung der jeweiligen kumulierten Zellen, die von dem Transceiver bedient werden.

7. Verfahren zur Bestimmung der Unterbrechungszeit einer Uplink-Übertragung, wobei das Verfahren Folgendes umfasst:
die Bestimmung (201) durch das Basisstationsgerät der Unterbrechungszeit einer Uplink-Übertragung jeder durch ein Endgerät, UE, kumulierten Zelle gemäß einer Messlücken-Konfiguration, wobei entsprechende, durch das UE kumulierte Zellen in unterschiedlichen Duplexmodi vorliegen oder unterschiedliche TDD UL/DL Konfigurationen aufweisen; und
das Anhalten (202) durch das Basisstationsgerät des Sendens von Ablaufinformationen einer Uplink-Übertragung während der Unterbrechungszeit einer Uplink-Übertragung jeder durch das UE kumulierten Zelle an die UE über die Zelle.

8. Verfahren nach Anspruch 7, wobei die Bestimmung durch das Basisstationsgerät der Unterbrechungszeit einer Uplink-Übertragung jeder durch das UE kumulierten Zelle Folgendes umfasst:
die Bestimmung durch das Basisstationsgerät der Unterbrechungszeit einer Uplink-Übertragung entsprechend aller durch das UE kumulierten Zellen als die Unterbrechungszeit einer Uplink-Übertragung jeder Zelle; oder
die Bestimmung durch das Basisstationsgerät der Unterbrechungszeit einer Uplink-Übertragung jeweils für jede durch das UE kumulierten Zelle; oder
die Bestimmung durch das Basisstationsgerät eines zur Durchführung von Messungen der UE erforderlichen Transceivers und von dem Transceiver bedienter kumulierter Zellen, die Bestimmung der Unterbrechungszeit einer Uplink-Übertragung der jeweiligen, von dem Transceiver bedienten kumulierten Zellen, sowie die Bestimmung der Unterbrechungszeit einer Uplink-Übertragung von kumulierten Zellen, die von anderen Transceivern der UE bedient werden, so dass diese 0 beträgt.

9. Verfahren nach Anspruch 8, wobei die Bestimmung durch das Basisstationsgerät der Unterbrechungszeit einer Uplink-Übertragung entsprechend allen durch das UE kumulierten Zellen als die Unterbrechungszeit einer Uplink-Übertragung jeder Zelle Folgendes umfasst:
die Bestimmung durch das Basisstationsgerät der Unterbrechungszeit einer Uplink-Übertragung, die sich aus einer Messlücke über jeder durch das UE kumulierten Zelle gemäß einem Duplexmodus und/oder einer Zeitduplex-, TDD, Uplink/Downlink, UL/DL, Konfiguration jeder Zelle ergibt, und die Bestimmung eines Vereinigungssatzes oder eines Schnittmengensatzes der Unterbrechungszeit einer Uplink-Übertragung über alle Zellen als die Unterbrechungszeit einer Uplink-Übertragung jeder Zelle; oder
die Bestimmung durch das Basisstationsgerät der Unterbrechungszeit einer Uplink-Übertragung jeder Zelle als eine Messlückenlänge, MGL, zuzüglich eines festgelegten Wertes; oder
die Bestimmung durch das Basisstationsgerät der Unterbrechungszeit einer Uplink-Übertragung, die sich aus einer Messlücke gemäß einem Bezugsduplexmodus und/oder einer TDD UL/DL Konfiguration ergibt, und die Annahme der Unterbrechungszeit einer Uplink-Übertragung als die Unterbrechungszeit einer Uplink-Übertragung jeder Zelle.

10. Verfahren nach Anspruch 8, wobei die Bestimmung durch das Basisstationsgerät der Unterbrechungszeit einer Uplink-Übertragung jeweils für jede durch das UE kumulierte Zelle Folgendes umfasst:
die Bestimmung durch das Basisstationsgerät der Unterbrechungszeit einer Uplink-Übertragung jeweils für jede durch das UE kumulierte Zelle auf der Basis eines Satzes von Duplexkonfigurationen, zu welchen die jeweilige Zelle gehört, wobei der Satz von Duplexkonfigurationen mindestens eine kumulierte Zelle aufweist, und, wenn der Satz von Duplexkonfigurationen mehrere Zellen aufweist, die mehreren Zellen einen gleichen Duplexmodus und/oder eine gleiche TDD UL/DL Konfiguration aufweisen;
wobei die Bestimmung durch das Basisstationsgerät der Unterbrechungszeit einer Uplink-Übertragung jeweils für jede durch das UE kumulierte Zelle auf der Basis des Satzes von Duplexkonfigurationen, zu welchen die jeweilige Zelle gehört, Folgendes umfasst:
die Bestimmung durch das Basisstationsgerät der Unterbrechungszeit einer Uplink-Übertragung gemäß einem Duplexmodus und/oder einer TDD UL/DL Konfiguration in dem Satz von Duplexkonfigurationen, und die Annahme der Unterbrechungszeit einer Uplink-Übertragung als die Unterbrechungszeit einer Uplink-Übertragung jeder Zelle in dem Satz von Duplexkonfigurationen; oder
die Bestimmung durch das Basisstationsgerät der Unterbrechungszeit einer Uplink-Übertragung gemäß einem Bezugsduplexmodus und/oder einer TDD UL/DL Konfiguration in dem Satz von Duplexkonfigurationen, und die Annahme der Unterbrechungszeit einer Uplink-Übertragung als die Unterbrechungszeit einer Uplink-Übertragung jeder Zelle in dem Satz von Duplexkonfigurationen.

11. Verfahren nach Anspruch 8, wobei die Bestimmung durch das Basisstationsgerät des zur Durchführung der Messungen des UE erforderlichen Transceivers Folgendes umfasst:
die Bestimmung durch das Basisstationsgerät eines Transceivers mit einer höchsten Frequenz als den zur Durchführung der Messungen des UE erforderlichen Transceiver; oder
die Bestimmung durch das Basisstationsgerät eines Transceivers mit einer niedrigsten Frequenz als den zur Durchführung der Messungen des UE erforderlichen Transceiver; oder
das Erhalten durch das Basisstationsgerät einer Korrespondenzbeziehung zwischen durch das UE unterstützten Frequenzbereichen und Transceivern, die Bestimmung von einem aus mehreren Transceivern als dem zur Durchführung der Messungen des UE erforderlichen Transceiver, und das Benachrichtigen des UE von Informationen über einen Frequenzbereich entsprechend dem zur Durchführung der Messungen erforderlichen Transceiver über eindeutige Konfigurationsinformationen.

12. Verfahren nach Anspruch 11, wobei das Erhalten durch das Basisstationsgerät der Korrespondenzbeziehung zwischen durch das UE unterstützten Frequenzbereichen und Transceivern Folgendes umfasst:
das Erhalten durch das Basisstationsgerät der Korrespondenzbeziehung zwischen durch das UE unterstützten Frequenzbereichen und Transceivern von einer Korrespondenzbeziehung zwischen Frequenzbereichen und in einem UE Potenzial gemeldeten Transceivern; oder
das Erhalten durch das Basisstationsgerät der Korrespondenzbeziehung zwischen durch das UE unterstützten Frequenzbereichen und Transceivern von einem Messlücken-Potenzial, das auf der Basis einer Frequenzbereichskombination in einem UE-Potenzial gemeldet wird.

13. Verfahren nach Anspruch 8, wobei die Bestimmung durch das Basisstationsgerät der Unterbrechungszeit einer Uplink-Übertragung der jeweiligen, von dem Transceiver bedienten kumulierten Zellen Folgendes umfasst:
die Bestimmung durch das Basisstationsgerät der Unterbrechungszeit einer Uplink-Übertragung, die sich aus einer Messlücke über jeder von dem Transceiver bedienten kumulierten Zelle gemäß einem Duplexmodus und/oder einer TDD UL/DL Konfiguration jeder Zelle ergibt, und die Annahme der bestimmten Unterbrechungszeit einer Uplink-Übertragung als die Unterbrechungszeit einer Uplink-Übertragung entsprechend jeder Zelle; oder
die Bestimmung durch das Basisstationsgerät der Unterbrechungszeit einer Uplink-Übertragung, die sich aus einem Messlücke über jeder von dem Transceiver bedienten kumulierten Zelle gemäß einem Duplexmodus und/oder einer TDD UL/DL Konfiguration jeder Zelle ergibt, und die Annahme eines Vereinigungssatzes der Unterbrechungszeit einer Uplink-Übertragung über den entsprechenden Zellen als die Unterbrechungszeit einer Uplink-Übertragung jeder Zelle; oder
die Bestimmung durch das Basisstationsgerät der Unterbrechungszeit einer Uplink-Übertragung, die sich aus einer Messlücke gemäß einem Bezugsduplexmodus und/oder einer TDD UL/DL Konfiguration ergibt, und die Annahme der Unterbrechungszeit einer Uplink-Übertragung als die Unterbrechungszeit einer Uplink-Übertragung der entsprechenden kumulierten Zellen, die von dem Transceiver bedient werden.

14. Endgerät, UE, wobei dieses Folgendes umfasst:
ein Bestimmungsmodul (11), das zur Bestimmung der Unterbrechungszeit einer Uplink-Übertragung jeder durch das UE kumulierten Zelle gemäß einer Messlückenkonfiguration ausgeführt ist, wobei entsprechende, durch das UE kumulierte Zellen in unterschiedlichen Duplexmodi vorliegen oder unterschiedliche TDD UL/DL Konfigurationen aufweisen; und
ein Verarbeitungsmodul (12), das zum Anhalten einer Uplink-Übertragung der Zelle während der Unterbrechungszeit einer Uplink-Übertragung jeder durch das UE kumulierten Zelle ausgeführt ist.

15. Basisstationsgerät, wobei dieses Folgendes umfasst:
ein Bestimmungsmodul (21), das zur Bestimmung der Unterbrechungszeit einer Uplink-Übertragung jeder durch das Endgerät, UE, kumulierten Zelle gemäß einer Messlückenkonfiguration ausgeführt ist, wobei entsprechende, durch das UE kumulierte Zellen in unterschiedlichen Duplexmodi vorliegen oder unterschiedliche TDD UL/DL Konfigurationen aufweisen; und
ein Verarbeitungsmodul (22), das zum Anhalten des Sendens von Ablaufinformationen einer Uplink-Übertragung während der Unterbrechungszeit einer Uplink-Übertragung jeder durch das UE kumulierten Zelle an das UE über die Zelle ausgeführt ist.

## Revendications

1. Procédé pour déterminer un temps d'interruption de transmission de liaison montante, le procédé comprend :
un Equipement d'utilisateur, UE, déterminant (101) un temps d'interruption de transmission de liaison montante de chaque cellule agrégée par l'UE, selon une configuration d'intervalle de mesure, où des cellules respectives agrégées par l'UE sont dans des modes duplex différents ou ont des configurations UL/DL TDD différentes ; et
l'UE arrêtant (102), pendant le temps d'interruption de transmission de liaison montante de chaque cellule agrégée par l'UE, la transmission de liaison montante de la cellule.

2. Procédé selon la revendication 1, dans lequel l'UE déterminant le temps d'interruption de transmission de liaison montante de chaque cellule agrégée par l'UE comprend :
l'UE déterminant un temps d'interruption de transmission de liaison montante correspondant à toutes les cellules agrégées par l'UE comme le temps d'interruption de transmission de liaison montante de chaque cellule ; ou
l'UE déterminant le temps d'interruption de transmission de liaison montante respectivement pour chaque cellule agrégée par l'UE ; ou
l'UE déterminant un émetteur-récepteur requis pour effectuer des mesures et des cellules agrégées desservies par l'émetteur-récepteur, déterminant un temps d'interruption de transmission de liaison montante des cellules agrégées respectives desservies par l'émetteur-récepteur, et déterminant un temps d'interruption de transmission de liaison montante de cellules agrégées desservies par d'autres émetteurs-récepteurs de l'UE comme étant 0.

3. Procédé selon la revendication 2, dans lequel l'UE déterminant le temps d'interruption de transmission de liaison montante correspondant à toutes les cellules agrégées par l'UE comme le temps d'interruption de transmission de liaison montante de chaque cellule comprend :
l'UE déterminant un temps d'interruption de transmission de liaison montante résultant d'un intervalle de mesure sur chaque cellule agrégée par l'UE selon un mode duplex et/ou une configuration de liaison montante/liaison descendante, UL/DL, Duplex à répartition dans le temps, TDD, de ladite chaque cellule, et déterminant un ensemble d'union ou un ensemble d'intersection du temps d'interruption de transmission de liaison montante sur toutes les cellules comme le temps d'interruption de transmission de liaison montante de ladite chaque cellule ; ou
l'UE déterminant le temps d'interruption de transmission de liaison montante de chaque cellule comme étant une Longueur d'intervalle de mesure, MGL, plus une valeur spécifiée ; ou
l'UE déterminant un temps d'interruption de transmission de liaison montante résultant d'un intervalle de mesure selon un mode duplex et/ou une configuration UL/DL TDD de référence, et prenant le temps d'interruption de transmission de liaison montante comme le temps d'interruption de transmission de liaison montante de ladite chaque cellule.

4. Procédé selon la revendication 2, dans lequel l'UE déterminant le temps d'interruption de transmission de liaison montante respectivement pour chaque cellule agrégée par l'UE comprend :
l'UE déterminant le temps d'interruption de transmission de liaison montante respectivement pour chaque cellule sur la base d'un ensemble de configurations duplex auquel appartient ladite chaque cellule, où l'ensemble de configurations duplex inclut au moins une cellule agrégée, et lorsque l'ensemble de configurations duplex inclut une pluralité de cellules, la pluralité de cellules ont un même mode duplex et/ou une même configuration UL/DL TDD ;
dans lequel l'UE déterminant le temps d'interruption de transmission de liaison montante respectivement pour chaque cellule sur la base de l'ensemble de configurations duplex auquel appartient ladite chaque cellule comprend :
l'UE déterminant un temps d'interruption de transmission de liaison montante selon un mode duplex et/ou une configuration UL/DL TDD dans l'ensemble de configurations duplex, et prenant le temps d'interruption de transmission de liaison montante comme le temps d'interruption de transmission de liaison montante de chaque cellule dans l'ensemble de configurations duplex ; ou
l'UE déterminant un temps d'interruption de transmission de liaison montante selon un mode duplex et/ou une configuration UL/DL TDD de référence dans l'ensemble de configurations duplex, et prenant le temps d'interruption de transmission de liaison montante comme le temps d'interruption de transmission de liaison montante de chaque cellule dans l'ensemble de configurations duplex.

5. Procédé selon la revendication 2, dans lequel l'UE déterminant l'émetteur-récepteur requis pour effectuer les mesures comprend :
l'UE déterminant un émetteur-récepteur à une fréquence la plus élevée comme l'émetteur-récepteur requis pour effectuer les mesures ; ou
l'UE déterminant un émetteur-récepteur à une fréquence la plus basse comme l'émetteur-récepteur requis pour effectuer les mesures ; ou
l'UE recevant des informations de configuration explicites en provenance d'un dispositif de station de base pour indiquer une bande correspondant à l'émetteur-récepteur requis pour effectuer les mesures, et déterminant un émetteur-récepteur correspondant à la bande comme l'émetteur-récepteur requis pour effectuer les mesures.

6. Procédé selon la revendication 2, dans lequel l'UE déterminant le temps d'interruption de transmission de liaison montante des cellules agrégées respectives desservies par l'émetteur-récepteur comprend :
l'UE déterminant un temps d'interruption de transmission de liaison montante résultant d'un intervalle de mesure sur chaque cellule agrégée desservie par l'émetteur-récepteur selon un mode duplex et/ou une configuration UL/DL TDD de ladite chaque cellule, et prenant le temps d'interruption de transmission de liaison montante déterminé comme le temps d'interruption de transmission de liaison montante correspondant à ladite chaque cellule ; ou
l'UE déterminant un temps d'interruption de transmission de liaison montante résultant d'un intervalle de mesure sur chaque cellule agrégée desservie par l'émetteur-récepteur selon un mode duplex et/ou une configuration UL/DL TDD de ladite chaque cellule, et prenant un ensemble d'union du temps d'interruption de transmission de liaison montante sur les cellules respectives comme le temps d'interruption de transmission de liaison montante de ladite chaque cellule ; ou
l'UE déterminant un temps d'interruption de transmission de liaison montante résultant d'un intervalle de mesure selon un mode duplex et/ou une configuration UL/DL TDD de référence, et prenant le temps d'interruption de transmission de liaison montante comme le temps d'interruption de transmission de liaison montante des cellules agrégées respectives desservies par l'émetteur-récepteur.

7. Procédé pour déterminer un temps d'interruption de transmission de liaison montante, le procédé comprend :
un dispositif de station de base déterminant (201) un temps d'interruption de transmission de liaison montante de chaque cellule agrégée par un Equipement d'utilisateur, UE, selon une configuration d'intervalle de mesure, où des cellules respectives agrégées par l'UE sont dans des modes duplex différents ou ont des configurations UL/DL TDD différentes ; et
le dispositif de station de base arrêtant (202) d'envoyer des informations d'ordonnancement de transmission de liaison montante pendant le temps d'interruption de transmission de liaison montante de chaque cellule agrégée par l'UE à l'UE sur la cellule.

8. Procédé selon la revendication 7, dans lequel le dispositif de station de base déterminant le temps d'interruption de transmission de liaison montante de chaque cellule agrégée par l'UE comprend :
le dispositif de station de base déterminant un temps d'interruption de transmission de liaison montante correspondant à toutes les cellules agrégées par l'UE comme le temps d'interruption de transmission de liaison montante de chaque cellule ; ou
le dispositif de station de base déterminant le temps d'interruption de transmission de liaison montante respectivement pour chaque cellule agrégée par l'UE ; ou
le dispositif de station de base déterminant un émetteur-récepteur requis pour effectuer des mesures de l'UE et des cellules agrégées desservies par l'émetteur-récepteur, déterminant un temps d'interruption de transmission de liaison montante des cellules agrégées respectives desservies par l'émetteur-récepteur, et déterminant un temps d'interruption de transmission de liaison montante de cellules agrégées desservies par d'autres émetteurs-récepteurs de l'UE comme étant 0.

9. Procédé selon la revendication 8, dans lequel le dispositif de station de base déterminant le temps d'interruption de transmission de liaison montante correspondant à toutes les cellules agrégées par l'UE comme le temps d'interruption de transmission de liaison montante de chaque cellule comprend :
le dispositif de station de base déterminant un temps d'interruption de transmission de liaison montante résultant d'un intervalle de mesure sur chaque cellule agrégée par l' UE selon un mode duplex et/ou une configuration de liaison montante/liaison descendante, UL/DL, Duplex à répartition dans le temps, TDD, de ladite chaque cellule, et déterminant un ensemble d'union ou un ensemble d'intersection du temps d'interruption de transmission de liaison montante sur toutes les cellules comme le temps d'interruption de transmission de liaison montante de ladite chaque cellule ; ou
le dispositif de station de base déterminant le temps d'interruption de transmission de liaison montante de chaque cellule comme étant une Longueur d'intervalle de mesure, MGL, plus une valeur spécifiée ; ou
le dispositif de station de base déterminant un temps d'interruption de transmission de liaison montante résultant d'un intervalle de mesure selon un mode duplex et/ou une configuration UL/DL TDD de référence, et prenant le temps d'interruption de transmission de liaison montante comme le temps d'interruption de transmission de liaison montante de ladite chaque cellule.

10. Procédé selon la revendication 8, dans lequel le dispositif de station de base déterminant le temps d'interruption de transmission de liaison montante respectivement pour chaque cellule agrégée par l'UE comprend :
le dispositif de station de base déterminant le temps d'interruption de transmission de liaison montante respectivement pour chaque cellule agrégée par l'UE sur la base d'un ensemble de configurations duplex auquel appartient ladite chaque cellule, où l'ensemble de configurations duplex inclut au moins une cellule agrégée, et lorsque l'ensemble de configurations duplex inclut une pluralité de cellules, la pluralité de cellules ont un même mode duplex et/ou une même configuration UL/DL TDD ;
dans lequel le dispositif de station de base déterminant le temps d'interruption de transmission de liaison montante respectivement pour chaque cellule agrégée par l'UE sur la base de l'ensemble de configurations duplex auquel appartient ladite chaque cellule comprend :
le dispositif de station de base déterminant un temps d'interruption de transmission de liaison montante selon un mode duplex et/ou une configuration UL/DL TDD dans l'ensemble de configurations duplex, et prenant le temps d'interruption de transmission de liaison montante comme le temps d'interruption de transmission de liaison montante de chaque cellule dans l'ensemble de configurations duplex ; ou
le dispositif de station de base déterminant un temps d'interruption de transmission de liaison montante selon un mode duplex et/ou une configuration UL/DL TDD de référence dans l'ensemble de configurations duplex, et prenant le temps d'interruption de transmission de liaison montante comme le temps d'interruption de transmission de liaison montante de chaque cellule dans l'ensemble de configurations duplex.

11. Procédé selon la revendication 8, dans lequel le dispositif de station de base déterminant l'émetteur-récepteur requis pour effectuer les mesures de l'UE comprend :
le dispositif de station de base déterminant un émetteur-récepteur à une fréquence la plus élevée comme l'émetteur-récepteur requis pour effectuer les mesures de l'UE ; ou
le dispositif de station de base déterminant un émetteur-récepteur à une fréquence la plus basse comme l'émetteur-récepteur requis pour effectuer les mesures de l'UE ; ou
le dispositif de station de base obtenant une relation de correspondance entre des bandes supportées par l'UE et des émetteurs-récepteurs, déterminant l'un d'une pluralité d'émetteurs-récepteurs comme l'émetteur-récepteur requis pour effectuer les mesures de l'UE, et notifiant à l'UE des informations sur une bande correspondant à l'émetteur-récepteur requis pour effectuer les mesures via des informations de configuration explicites.

12. Procédé selon la revendication 11, dans lequel le dispositif de station de base obtenant la relation de correspondance entre des bandes supportées par l'UE et des émetteurs-récepteurs comprend :
le dispositif de station de base obtenant la relation de correspondance entre des bandes supportées par l'UE et des émetteurs-récepteurs à partir d'une relation de correspondance entre des bandes et des émetteurs-récepteurs rapportée dans une capacité d'UE ; ou
le dispositif de station de base obtenant la relation de correspondance entre des bandes supportées par l'UE et des émetteurs-récepteurs à partir d'une capacité d'intervalle de mesure rapportée sur la base d'une combinaison de bande dans une capacité d'UE.

13. Procédé selon la revendication 8, dans lequel le dispositif de station de base déterminant le temps d'interruption de transmission de liaison montante des cellules agrégées respectives desservies par l'émetteur-récepteur comprend :
le dispositif de station de base déterminant un temps d'interruption de transmission de liaison montante résultant d'un intervalle de mesure sur chaque cellule agrégée desservie par l'émetteur-récepteur selon un mode duplex et/ou une configuration UL/DL TDD de ladite chaque cellule, et prenant le temps d'interruption de transmission de liaison montante déterminé comme le temps d'interruption de transmission de liaison montante correspondant à ladite chaque cellule ; ou
le dispositif de station de base déterminant un temps d'interruption de transmission de liaison montante résultant d'un intervalle de mesure sur chaque cellule agrégée desservie par l'émetteur-récepteur selon un mode duplex et/ou une configuration UL/DL TDD de ladite chaque cellule, et prenant un ensemble d'union du temps d'interruption de transmission de liaison montante sur les cellules respectives comme le temps d'interruption de transmission de liaison montante de ladite chaque cellule ; ou
le dispositif de station de base déterminant un temps d'interruption de transmission de liaison montante résultant d'un intervalle de mesure selon un mode duplex et/ou une configuration UL/DL TDD de référence, et prenant le temps d'interruption de transmission de liaison montante comme le temps d'interruption de transmission de liaison montante des cellules agrégées respectives desservies par l'émetteur-récepteur.

14. Equipement d'utilisateur, UE, l'UE comprend :
un module de détermination (11) configuré pour déterminer un temps d'interruption de transmission de liaison montante de chaque cellule agrégée par l'UE, selon une configuration d'intervalle de mesure, où des cellules respectives agrégées par l'UE sont dans des modes duplex différents ou ont des configurations UL/DL TDD différentes ; et
un module de traitement (12) configuré pour arrêter, pendant le temps d'interruption de transmission de liaison montante de chaque cellule agrégée par l'UE, la transmission de liaison montante de la cellule.

15. Dispositif de station de base, le dispositif de station de base comprend :
un module de détermination (21) configuré pour déterminer un temps d'interruption de transmission de liaison montante de chaque cellule agrégée par un Equipement d'utilisateur, UE, selon une configuration d'intervalle de mesure, où des cellules respectives agrégées par l'UE sont dans des modes duplex différents ou ont des configurations UL/DL TDD différentes ; et
un module de traitement (22) configuré pour arrêter d'envoyer des informations d'ordonnancement de transmission de liaison montante pendant le temps d'interruption de transmission de liaison montante de chaque cellule agrégée par l' UE à l' UE sur la cellule.
